# EUROPÄISCHE PATENTANMELDUNG

(11) **EP 4 328 152 A2**
(43) Veröffentlichungstag der Anmeldung: **28.02.2024**
(21) Anmeldenummer: 23164667.0
(22) Anmeldetag: 28.03.2023
(51) Int. Cl.: B65G 1/04, B66F 9/06, B66F 9/07

(54) **LAGER- UND ENTNAHMESYSTEM, ARBEITSPLATZ, TRANSPORTFAHRZEUG, ÜBERGABEPLATZ, TRÄGER UND VERFAHREN FÜR EIN LAGER- UND ENTNAHMESYSTEM**

(30) Priorität: 05.07.2022 DE 102022206859
(71) Anmelder: Gebhardt Fördertechnik GmbH, D-74889 Sinsheim (DE)
(72) Erfinder: Gebhardt, Marco, 74889 Sinsheim (DE); Knoop, Alexander, 74889 Sinsheim (DE)
(74) Vertreter: Ullrich & Naumann PartG mbB

(57) **Zusammenfassung**

Im Hinblick auf einen flexiblen Betrieb mit konstruktiv einfachen Mitteln ist ein Lager- und Entnahmesystem (3) angegeben, umfassend:
eine Gitterstruktur (2) mit einer Vielzahl von Gitterzellen, wobei jede Gitterzelle eine Lagersäule (16) einer unterhalb der Gitterstruktur (2) angeordneten Lagerstruktur definiert, wobei die Lagersäulen (16) geeignet sind, jeweils einen vertikalen Stapel von Behältern aufzunehmen, und wobei die Gitterstruktur (2) Längstransportwege in einer Längsrichtung und Quertransportwege in einer Querrichtung definiert, und
mindestens ein zum Fahren entlang der Längstransportwege und/oder Quertransportwege ausgebildetes Transportfahrzeug (1).

Das Lager- und Entnahmesystem (3) ist derart ausgestaltet und weitergebildet, dass mindestens eine Lagersäule (16) eine Aufnahme (27, 30, 47) für mindestens einen Träger (11) zum Einhängen von Hängeware (35) aufweist.

Ein Arbeitsplatz (41), ein Transportfahrzeug (1), ein Übergabeplatz (50) und ein Träger (11) sind entsprechend ausgestaltet. Verfahren zum Betreiben der genannten Gegenstände sind angegeben.

## Beschreibung

Die Erfindung betrifft ein Lager- und Entnahmesystem, umfassend:
eine Gitterstruktur mit einer Vielzahl von Gitterzellen, wobei jede Gitterzelle eine Lagersäule einer unterhalb der Gitterstruktur angeordneten Lagerstruktur definiert,
wobei die Lagersäulen geeignet sind, jeweils einen vertikalen Stapel von Behältern aufzunehmen, und wobei die Gitterstruktur Längstransportwege in einer Längsrichtung und Quertransportwege in einer Querrichtung definiert, und
mindestens ein zum Fahren entlang der Längstransportwege und/oder Quertransportwege ausgebildetes Transportfahrzeug.

Des Weiteren betrifft die vorliegende Erfindung einen Arbeitsplatz, ein Transportfahrzeug, einen Übergabeplatz, sowie einen Träger für ein Lager- und Entnahmesystem.

Schließlich betrifft die vorliegende Erfindung Verfahren zum Betreiben eines Lager- und Entnahmesystems sowie zur Übergabe von Hängeware von einem Lager- und Entnahmesystem an eine Hängebahn eines Hängefördersystems und von einer Hängebahn eines Hängefördersystems an ein Lager- und Entnahmesystem.

Lager- und Entnahmesysteme der eingangs genannten Art sind aus der Praxis bekannt und existieren in unterschiedlichen Ausführungsformen. Die WO 2020/094604 A1 und die WO 2021/165030 A1 zeigen beispielhafte Ausführungsformen von Lager- und Entnahmesystemen.

Ganz grundsätzlich bezieht sich die Erfindung auf das Handling/die Handhabung von Hängeware in Lager- und Entnahmesystemen. Hängewaren sind Waren, die bevorzugt hängend transportiert und gelagert werden sollen, beispielsweise im Mode- oder Fashionbereich. Kleidung ist jedoch nur ein mögliches Beispiel für Hängewaren. Viele dieser Hängewaren sollen oder können nicht gefaltet oder zusammengelegt werden, um in einen Standardlagerbehälter zu passen, und können deshalb nicht in einem automatischen Blocklager gelagert werden.

Der vorliegenden Erfindung liegt nunmehr die Aufgabe zugrunde, ein Lager- und Entnahmesystem, einen Arbeitsplatz für ein Lager- und Entnahmesystem, ein Transportfahrzeug für ein Lager- und Entnahmesystem, einen Übergabeplatz für ein Lager- und Entnahmesystem, einen Träger für ein Lager- und Entnahmesystem, sowie Verfahren zum Betreiben eines Lager- und Entnahmesystems sowie zur Übergabe von Hängeware von einem Lager- und Entnahmesystem an eine Hängebahn eines Hängefördersystems und von einer Hängebahn eines Hängefördersystems an ein Lager- und Entnahmesystem anzugeben, wonach ein flexiblerer Betrieb mit konstruktiv einfachen Mitteln ermöglicht ist.

Erfindungsgemäß wird die voranstehende Aufgabe durch ein Lager- und Entnahmesystem mit den Merkmalen des Anspruchs 1, durch einen Arbeitsplatz mit den Merkmalen des Anspruchs 6, durch ein Transportfahrzeug mit den Merkmalen des Anspruchs 9, durch einen Übergabeplatz mit den Merkmalen des Anspruchs 11, durch einen Träger mit den Merkmalen des Anspruchs 14 sowie durch Verfahren mit den Merkmalen der Ansprüche 15, 16 und 17 gelöst.

Danach ist das Lager- und Entnahmesystem gemäß Anspruch 1 dadurch gekennzeichnet, dass mindestens eine Lagersäule eine Aufnahme für mindestens einen Träger zum Einhängen von Hängeware aufweist.

Anspruch 6 beansprucht den Arbeitsplatz dieses Lager- und Entnahmesystems. Anspruch 9 beansprucht das Transportfahrzeug dieses Lager- und Entnahmesystems. Anspruch 11 beansprucht den Übergabeplatz dieses Lager- und Entnahmesystems. Anspruch 14 beansprucht den Träger dieses Lager- und Entnahmesystems. Schließlich ist das Verfahren zum Betreiben eines Lager- und Entnahmesystems, Arbeitsplatzes, Transportfahrzeugs, Übergabeplatzes und/oder eines Trägers gemäß Anspruch 15 dadurch gekennzeichnet, dass Hängeware in mindestens einen Träger zur Lagerung eingehängt und/oder zur Entnahme ausgehängt wird. Die Ansprüche 16 und 17 beanspruchen Verfahren zur Übergabe von Hängeware zwischen dem Lager- und Entnahmesystem und einer Hängebahn eines Hängefördersystems und andersherum.

In erfindungsgemäßer Weise ist zunächst erkannt worden, dass durch geschickte Ausgestaltung mindestens einer Lagersäule, die voranstehende Aufgabe auf überraschend einfache Weise gelöst wird. In weiter erfindungsgemäßer Weise weist hierbei im Konkreten mindestens eine Lagersäule eine Aufnahme für mindestens einen Träger zum Einhängen von Hängeware auf. Somit kann Hängeware auch in einem automatischen Blocklager hängend gelagert werden und muss nicht länger gefaltet oder zusammengelegt werden, um in einem Behälter aufbewahrt werden zu können. Vielmehr kann bei der Lagerung von Hängeware in dem Lager- und Entnahmesystem durch Einhängen der Hängeware in einen Träger auf einen Behälter verzichtet werden.

Hierdurch wird bei dem erfindungsgemäßen Lager- und Entnahmesystem eine erhöhte Flexibilität realisiert, da unterschiedliche Warengattungen - Hängeware und/oder Ware in Behältern - eingelagert und gehandhabt werden können. In diesem Dokument ist mit dem Begriff "Behälter" jegliches Behältnis umfasst, das zum Lagern und/oder Transportieren von geeignetem Fördergut geeignet ist. Der Begriff "Aufnahme" umfasst jedwede Konstruktion, die geeignet ist, mindestens einen Träger zum Einhängen von Hängeware aufzunehmen, unabhängig davon, welcher Teil des Trägers in der Aufnahme aufgenommen wird, auf der Aufnahme aufliegt oder von der Aufnahme - die beispielsweise auch als aktiver Greifer ausgebildet sein kann - gegriffen wird. Insbesondere können die verschiedenen beschriebenen Aufnahmen in der Lagersäule, am Greifer/Lastaufnahmemittel des Transportfahrzeugs, an der Haltevorrichtung, der Übergabevorrichtung und/oder der Hängebahn ausgebildet sein.

Sofern mindestens eine der Lagersäulen nicht ausschließlich dazu eingerichtet ist, jeweils einen vertikalen Stapel von Behältern aufzunehmen, sondern zusätzlich oder stattdessen mindestens eine Aufnahme für mindestens einen Träger zum Einhängen von Hängeware aufweist, eignet sich das Lager- und Entnahmesystem auch für Hängeware.

Folglich sind mit dem erfindungsgemäßen Lager- und Entnahmesystem, dem erfindungsgemäßen Arbeitsplatz, dem erfindungsgemäßen Transportfahrzeug, dem erfindungsgemäßen Übergabeplatz, dem erfindungsgemäßen Träger und den erfindungsgemäßen Verfahren ein Lager- und Entnahmesystem, ein Arbeitsplatz, ein Transportfahrzeug, ein Übergabeplatz, ein Träger sowie Verfahren bereitgestellt, wonach ein flexiblerer Betrieb mit konstruktiv einfachen Mitteln ermöglicht ist.

Der Träger kann Metall, Kunststoff und/oder andere Materialien aufweisen. Der Träger kann beispielsweise als Kleiderstange ausgebildet sein. Um eine hinreichende Festigkeit bei möglichst leichter Bauweise zu gewährleisten, kann der Träger vorzugsweise aus Metall - beispielsweise aus Stahl oder Aluminium - hergestellt sein. Auch eine Konstruktion aus Kunststoff oder Faserverbundwerksstoffen bietet sich an.

Um die Flexibilität bei der Einlagerung in das Lager- und Entnahmesystem in Bezug auf die Höhe der Aufnahmen für den Träger - vorzugsweise in Abhängigkeit der Länge der Hängeware - zu verbessern, kann die Aufnahme ein Sägezahnprofil aufweisen. Dabei kann die Aufnahme als eine sich in Vertikalrichtung erstreckende Leiste ausgebildet oder auf einer Vertikalstrebe in der Lagersäule angeordnet sein. Die Leiste kann vorzugsweise in Längsrichtung oder in Querrichtung im Wesentlichen mittig zwischen zwei Stehern angeordnet sein. Jede Lagersäule der unterhalb der Gitterstruktur angeordneten Lagerstruktur kann dabei von vier in der Draufsicht im Rechteck angeordneten Stehern gebildet sein. Da die Steher selbst sich an den Ecken der Lagersäule befinden und die Lagesäule definieren und/oder begrenzen, ist eine Anordnung des Trägers im Bereich der Mitte zwischen zwei Stehern sinnvoll, damit die Hängeware sich ausgehend von dem Träger - in der vertikalen Ebene senkrecht zu einer Trägerlängsachse - erstrecken kann. Die Leiste kann dabei selbst an einem zusätzlichen mittigen Steher angeordnet sein oder als mittiger Steher ausgebildet sein.

Insbesondere kann die Lagersäule in ihrem Aufbau von konventionellen Lager- und Regalschächten automatischer Blocklager abweichen. So kann die Aufnahme zum Ablegen des Trägers im Wesentlichen mittig, jedoch in der horizontalen Ebene senkrecht zur Trägerlängsachse um einige Millimeter außermittig angeordnet sein. Mit anderen Worten befindet sich der Träger im eingehängten beziehungsweise aufgenommenen Zustand nicht genau in der Mitte zwischen zwei die Ecken einer Lagersäule definierenden Stehern. Diese leicht außermittige Aufnahme kann den Träger aufnehmen, beispielsweise indem der Träger in die Aufnahme eingehängt wird. Hierbei sollte ein Lastaufnahmemittel, das der Gitterstruktur oder vorzugsweise dem Transportfahrzeug zugeordnet sein kann, in der Lage sein, den Träger vertikal herabzulassen und den Träger seitlich horizontal zu verschieben und in das Sägezahnprofil einzuführen sowie daraufhin die Verbindung zum Träger zu trennen. Das Lastaufnahmemittel kann dabei also in der horizontalen Ebene eine Relativbewegung seitlich hin zum Sägeprofil ausführen. Eine enge Führung des beispielsweise als Greifer ausgebildeten Lastaufnahmemittels im Schacht der Lagersäule stellt dabei die Lagestabilität - kein Kippen beziehungsweise keine Schrägstellung - des Lastaufnahmemittels sicher. Zur Auslagerung des Trägers aus der Aufnahme können diese Schritte umgekehrt durchgeführt werden. Hierbei kann der Abstand zwischen den Stehern und damit die Länge/Breite der Lagersäule um mindestens das Maß vergrößert werden, um welches der Träger seitlich horizontal verschiebbar sein muss, um den Träger beim Heben und/oder Absenken an den Zähnen des Sägezahnprofils vorbeifahren zu können. Im Hinblick auf eine besonders einfache und günstige Herstellbarkeit kann die Aufnahme - zumindest im Bereich einer Auflagefläche für den Träger - zudem einen U-förmigen Querschnitt aufweisen. Damit kann ein im Querschnitt kreisrunder und mithin einfach herstellbarer Träger fest und sicher aufgenommen werden.

Im Hinblick auf eine platzsparendere Bauweise kann die Aufnahme in einer Auflagefläche für den Träger eine Ausnehmung aufweisen, wobei der Träger vorzugsweise in einer ersten Pose teilweise auf der Auflagefläche aufliegen kann, und in einer zweiten Pose durch die Ausnehmung hindurch vertikal bewegbar ist. Durch die Ausnehmung ist es nicht länger erforderlich, den Träger am Lastaufnahmemittel horizontal zu verschieben und in das Sägeprofil beziehungsweise in die vorzugsweise U-förmige Aufnahme ein- und/oder abzulegen. Ist der Träger in der zweiten Pose durch die Ausnehmung in der Auflagefläche der Aufnahme hindurch vertikal bewegbar, so wird im Schacht der Lagersäule kein zusätzlicher seitlicher Bauraum - in der horizontalen Ebene senkrecht zur Trägerlängsachse - benötigt, um die Träger horizontal manövrieren und ablegen/einhängen zu können. Zudem muss das vorzugsweise als Greifer ausgebildete Lastaufnahmemittel den Träger nicht aktiv in der horizontalen Ebene verfahren können. Daraus ergibt sich ein Kosten- und Platzvorteil. Mit anderen Worten kann der Träger in der ersten Pose von der Aufnahme aufgenommen werden und in der zweiten Pose auf- und abbewegt werden, beispielsweise, um in eine darüber oder darunter befindliche Aufnahme eingehängt zu werden, oder um aus der Lagersäule entnommen zu werden. Besonders einfach und aufwandsarm ist eine Ausgestaltung, in welcher ein Träger durch einfache Rotation um seine Trägerlängsachse von der ersten Pose in die zweite Pose und zurück überführbar ist.

Im Hinblick auf einen einfachen Aufbau und eine vorteilhafte Konstruktion können die Enden des Trägers entsprechend der Aufnahme ausgebildet werden. Beispielsweise können - bei einem Träger mit kreisrundem Querschnitt - die Enden seitlich abgeplattet werden, so dass die Enden einen rechteckförmigen oder zumindest einen Querschnitt mit zwei parallelen Seiten aufweisen. Dabei kann das beispielsweise als Greifer ausgebildete Lastaufnahmemittel in der Lage sein, den Träger in Rotationsrichtung um seine Trägerlängsachse zu drehen. Hierfür kann beispielsweise ein Motor im Greifer/Lastaufnahmemittel als Antrieb dienen. Der Motor kann auf platzsparende Weise drehzahlgeregelt ausgebildet sein. Im Hinblick auf eine besonders einfache Fertigung können die Enden des Trägers auch zusammengepresst sein. Die Rotation des Trägers kann reib- und/oder formschlüssig umgesetzt werden.

Gemäß einer vorteilhaften Ausgestaltung weist der Träger ein formschlüssiges Bauelement auf, beispielsweise ein Zahnrad, das mit einer Welle-Nabe-Verbindung - etwa einer Passfeder oder einem Spannsatz - auf dem Träger angebracht wird, um die Rotation des Trägers kontrolliert überwachen zu können. Auf diese Weise lassen sich besser Fehler bei der Verwendung des Lager- und Entnahmesystems verhindern. Ein solcher Fehler läge beispielsweise vor, wenn ein Träger nicht richtig in der Aufnahme im Steher eingehängt wäre oder ein Träger sich im Moment des schnellen Ablassens in eine unpassende Rotationsorientierung bewegt. Da die Kräfte auf das Zahnrad vergleichsweise gering sind, könnte das Zahnrad in einer kostengünstigen Ausführungsform Kunststoff aufweisen oder aus Kunststoff hergestellt sein.

Im Hinblick auf einen einfachen und robusten Aufbau des Lager- und Entnahmesystems kann die Aufnahme an einer Vertikalstrebe in der Lagersäule angeordnet sein. Dabei können vorzugsweise mehrere Aufnahmen auf unterschiedlichen Höhen an der Vertikalstrebe angeordnet sein, oder - wie im Falle der beschriebenen Leiste und/oder des Sägezahnprofils - eine Aufnahme geeignet sein, um den Träger in unterschiedlichen Höhen an der Vertikalstrebe aufzunehmen. Dabei können auch Träger in unterschiedlichen Höhen übereinander in einer Lagersäule aufgenommen werden. Die Höhen können in Abhängigkeit von der Länge der zu lagernden Hängeware - T-Shirts, Latzhosen, Sakkos, Abendkleider, ... - gewählt werden, wobei je nach Art der Hängeware und vorgesehener Handhabung bei der Wahl der Höhe, an welcher ein Träger eingehängt werden soll, zusätzlich zur Länge der Hängeware ein angemessener Puffer berücksichtigt werden kann.

Die Anzahl von übereinander in dieselbe Lagersäule einhängbaren Trägern ist einerseits durch die Höhe der Lagersäulen des Lager- und Entnahmesystems begrenzt. Andererseits ergibt sich bei der Verwendung von langen oder sehr langen Hängewaren ein entsprechend hohes Transportfahrzeug, dessen Fahrt und Bewegungen geregelt werden müssen, damit das Transportfahrzeug nicht in Schwingung gerät. Vorteilhaft ist dabei grundsätzlich ein niedriger Schwerpunkt des Transportfahrzeugs, also die Anordnung schwerer Komponenten unten im Fahrzeug. Ansätze zur Schwingungsvermeidung sind beispielsweise in der Patentschrift EP 3 115 331 B1 der Anmelderin beschrieben. Hier wird eine passive Schwingungsreduktion durch eine gezielte Drehzahl-Sollwertvorgabe für das Transportfahrzeug/den Roboter beziehungsweise den Antrieb eines Regalbediengerätes ermöglicht.

Im Hinblick auf einen besonders einfachen Betrieb und eine genaue Steuerung beim Ein- und Auslagern von Trägern mit Hängewaren kann ein Informationsträger innerhalb der Lagersäule angeordnet sein, der Informationen in Bezug auf eine Lagerhöhe und/oder Lagerposition trägt. Der Informationsträger kann beispielsweise als QR-Code, Codeband, RFID oder auf andere bekannte Weise ausgebildet sein. Um die ideale Lagerhöhe in Abhängigkeit von unterschiedlich langen Hängewaren wählen zu können, bietet es sich an, innerhalb der Lagersäule mehrere Informationsträger vorzusehen, die vorzugsweise vertikal entlang der Steher und/oder entlang der Vertikalstrebe angeordnet sein können. Dabei kann eine grobe Positionierung über einen Drehgeber am Hubmotor erfolgen. Die am Regal beziehungsweise in der Lagersäule angeordneten Informationsträger können dann zur absoluten Positionierung verwendet werden. Der Informationsträger dient der Messung der Lagerhöhe und/oder der Lagerposition im Schacht der Lagersäule. Ist eine Aufnahme in Gestalt eines Sägeprofils im Schacht angeordnet, kann beispielsweise auch ein Sensor im Schacht vorgesehen sein, um die Position des eingelagerten Trägers zu erfassen. Somit kann jeder Träger in Abhängigkeit von der Länge der Hängeware platzsparend einlagern werden.

Im Hinblick auf eine besonders bedienerfreundliche Handhabung von Hängeware mit dem beschriebenen Lager- und Entnahmesystem kann ein entsprechend eingerichteter Arbeitsplatz vorgesehen sein. Der Arbeitsplatz kann für das Bedienpersonal Zugang zu mindestens einem Träger schaffen. Der beschriebene Arbeitsplatz kann im Sinne einer Arbeitsstation des Lager- und Entnahmesystems für das Bedienpersonal realisiert sein, wobei mehrere Arbeitsplätze oder Arbeitsstationen an oder in einer Lagerstruktur des Lager- und Entnahmesystems realisiert sein können, nämlich vorzugsweise an den Lagersäulen, die sich am Rand der Lagerstruktur befinden. Der Arbeitsplatz kann einen vertikalen Schacht aufweisen. Vorzugsweise kann ein Träger mittels eines dem Transportfahrzeug oder der Gitterstruktur zugeordneten Lastaufnahmemittels beziehungsweise Greifers entlang dem Schacht von dem Transportfahrzeug kommend in Richtung einer Zugangsöffnung im Schacht oder entgegengesetzt in Richtung Transportfahrzeug bewegt werden. Ein im Schacht befindlicher beziehungsweise in eine Aufnahme des Arbeitsplatzes eingehängter Träger kann durch die Zugangsöffnung zugänglich gemacht werden. Somit sind die Träger in einem automatischen Blocklager durch das Transportfahrzeug bis zum Arbeitsplatz transportierbar, und das Bedienpersonal kann komfortabel und effizient auf die darin befindliche Hängeware zugreifen.

Der Arbeitsplatz kann nicht nur im Zusammenhang mit den hier beschriebenen Trägern zum Einhängen von Hängeware eingesetzt werden. Im Hinblick auf einen besonders flexiblen Betrieb des Lager- und Entnahmesystems kann der Arbeitsplatz zusätzlich oder alternativ auch für Standardlagerbehälter nach dem Stand der Technik verwendet werden, oder mit Behältern, die im Behälter einen festen Träger zum Einhängen von Hängeware aufweisen. Somit können an ein und demselben Arbeitsplatz sowohl Behälter als auch die hier beschriebenen Träger zum Einhängen von Hängeware dem Bedienpersonal zugänglich gemacht und auf sichere Weise bedient werden. Ebenso kann vorgesehen sein, dass ein Arbeitsplatz ausschließlich für die Zugänglichmachung und Bedienung von Behältern ohne Träger zum Einhängen von Hängeware oder ausschließlich für die Zugänglichmachung und Bedienung der hier beschriebenen Träger zum Einhängen von Hängeware ausgebildet ist.

Anders als bei der Einlagerung von Behältern entsteht bei der hier beschriebenen direkten Lagerung der Träger in dem Lager- und Entnahmesystem kein großes Sicherheitsrisiko für das Bedienpersonal durch einen herunterfallenden Träger. Wenn es sich bei der eingelagerten Hängeware um Kleidung handelt, ist die Gefahr für das Bedienpersonal weiter minimiert, da die Kleidung nachgibt und ein vergleichsweise geringes Gewicht aufweist.

Im Hinblick auf eine erhöhte Sicherheit für das Bedienpersonal kann die Zugangsöffnung mit einer Abdeckung verschließbar sein. Beispielsweise kann es sich bei der Abdeckung um ein Rolltor oder um ein mehrgliedriges Rollladenprofil handeln. Insbesondere während in dem Schacht der jeweiligen Lagersäule Träger und/oder Behälter vom Arbeitsplatz weg oder zum Arbeitsplatz hin transportiert werden, ist das Verletzungsrisiko für das Bedienpersonal reduziert, wenn die Zugangsöffnung mit der Abdeckung verschlossen ist.

Bevorzugt verschließt die Abdeckung in einer geschlossenen Position die Zugangsöffnung und gibt die Zugangsöffnung in einer geöffneten Position frei. Vorzugsweise kann die Abdeckung nur dann in die geöffnete Position gebracht werden, wenn sich kein Greifer im Schacht oder in der diesem Schacht zugeordneten Lagersäule befindet. Finden Transportvorgänge der Träger und/oder Behälter im Schacht oder in der Lagersäule statt, sollte die Abdeckung sich zum Schutze des Bedienpersonals in der geschlossenen Position befinden.

Um eine besonders hohe Sicherheit für das Bedienpersonal zu gewährleisten, kann die Abdeckung in der geöffneten Position den Schacht zum Transportfahrzeug hin verschließen. Vorzugsweise kann sich das Transportfahrzeug dabei oben auf der Gitterstruktur befinden, so dass die Abdeckung in der geöffneten Position den Schacht nach oben zum Transportfahrzeug hin verschließt. Das ist beispielsweise möglich, wenn die Abdeckung als Rolltor oder als mehrgliedriges Rollladenprofil ausgebildet ist, und die Abdeckung beim Übergang von der geschlossenen in die geöffnete Position nicht um eine Welle herum aufgerollt wird, sondern in Führungen verläuft, die im Bereich der Zugangsöffnung zwar vertikal verlaufen und die Abdeckung vertikal führen, aber oberhalb der Zugangsöffnung in die Horizontale übergehen und die Abdeckung horizontal führen, so dass die Abdeckung quer zum vertikalen Schacht in horizontaler Richtung verläuft und der Schacht zum Transportfahrzeug hin verschlossen wird. Denkbar ist aber auch, dass die Abdeckung den Schacht zu einer Seite oder zu mehreren Seiten hin verschließt, beispielsweise, um einen Greifer eines Transportfahrzeugs abzuschirmen, der sich in einem benachbarten oder in einem seitlich neben dem zu verschließenden Schacht gebildeten weiteren Schacht befindet und in diesem weiteren Schacht Träger und/oder Behälter handhabt.

Befindet sich die Abdeckung in der geöffneten Position, so erhält das Bedienpersonal Zugriff auf die Hängeware. Gleichzeitig wird der Zugriff durch das Transportfahrzeug abgetrennt. Selbst wenn nun während der Handhabung von Hängeware durch das Bedienpersonal ein Transportfahrzeug von oben einen Träger oder einen Behälter in die Lagersäule einbringen sollte, würde der Träger/Behälter durch die Abdeckung aufgehalten und könnte das Bedienpersonal nicht verletzen. Wird die Abdeckung in die geschlossene Position gebracht und damit der Zugriff des Bedienpersonals auf die Hängeware ausgeschlossen, kann umgekehrt das Transportfahrzeug ungestört arbeiten.

Alternativ zu der beschriebenen Absicherung mittels Abdeckung ist eine Absicherung auch mit Lichtgittern möglich, die bei gleichzeitigem Eingriff von Transportfahrzeug und Bedienpersonal in den Schacht eines Arbeitsplatzes sofort ein Not-Halt-Signal auslösen. Dies kann allerdings insbesondere bei Lager- und Entnahmesystemen mit vielen Transportfahrzeugen und/oder bei Not-Halt-Signalübertragung per WLAN problematisch sein. Vorteilhaft ist eine Absicherung mit Lichtgittern jedoch, wenn die Träger nach dem Paternosterprinzip ein- und/oder ausgelagert werden. Dabei kann sich ein Träger in der Bearbeitung durch das Bedienpersonal befinden, während ein oder mehrere benachbarte Träger - darüber, darunter und/oder daneben - bereits ein- und/oder ausgelagert werden. Dabei können die Träger horizontal und/oder vertikal ein- und/oder ausgelagert werden.

Im Hinblick auf eine besonders störungsfreie Ein- und Auslagerung von Hängeware mit dem beschriebenen Lager- und Entnahmesystem kann ein entsprechend eingerichtetes Transportfahrzeug vorgesehen sein. Dabei kann das Transportfahrzeug vorzugsweise ein Lastaufnahmemittel mit mindestens einer Aufnahme für mindestens einen Träger zum Einhängen von Hängeware aufweisen. Das Lastaufnahmemittel kann ein an den Träger angepasster Greifer sein. Bei dem Greifer kann es sich um einen aktiven oder passiven Greifer handeln.

Bei dem hier beschriebenen Ein- und Auslagern von Trägern können die Hängewaren mit Dreck und Schmutz in Kontakt kommen. Im Vergleich zu einem Hängetaschensorter, bei welchem sich die Hängeware geschützt in einer Tasche befindet, gibt es im hier beschriebenen Lager- und Entnahmesystem viele Stellen, an denen die Hängeware in Kontakt mit Fahrschienen, Stehern, anderen Trägern und/oder den Aufnahmen beziehungsweise Aufhängepunkten der Träger in Berührung kommen könnte. Zudem können die Fahrschienen und die Bereiche der Steher, in welchen das Lastaufnahmemittel geführt wird, mit dem Abrieb von Laufrädern usw. verschmutzt sein.

Die Kleidung kann daher zum Schutz vor Schmutz in aufwendiger Weise in einen Plastiksack verpackt sein, etwa wie es aus der Reinigung bekannt ist. Vorteilhafterweise wird die Konstruktion des Lager- und Entnahmesystems so umgesetzt, dass kaum ein Kontakt zwischen der Hängeware und den Teilen des Lager- und Entnahmesystems entsteht.

Bevorzugt weist das Lastaufnahmemittel eine Begrenzungseinrichtung auf, die eingerichtet ist, um ein Schwenken der Hängeware während des Transports zu begrenzen. Denn bei dem vorgeschlagenen Träger ist die Hängeware nur begrenzt in der Bewegung eingeschränkt. Denn das Transportfahrzeug befördert hier nicht einen Standardbehälter oder ein Gestell mit einer Kleiderstange, sondern die Kleiderstange beziehungsweise den Träger direkt und ohne zusätzliche aufwendige Hilfsmittel. Wenn der Träger in der horizontalen Ebene senkrecht zu einer Trägerlängsachse beschleunigt oder abgebremst wird - etwa beim Fahren des Transportfahrzeugs entlang der Längstransportwege und/oder Quertransportwege mit in den Träger eingehängter Hängeware - kann die Hängeware in Rotationsrichtung um den Träger herum oder auch in Richtung der Trägerlängsachse nachschwenken. Der Greifer des Transportfahrzeugs kann an den verwendeten Träger angepasst sein, so dass der Greifer den Träger greifen und vorzugsweise zeitgleich die Kleiderbügel fixieren kann. Die Begrenzungseinrichtung soll verhindern, dass Teile der Hängeware an Teilen und/oder Elementen des Lager- und Entnahmesystems hängen bleiben oder den Betrieb auf andere Weise stören. Außerdem kann die Begrenzungseinrichtung die Hängeware vor Schmutz schützen.

Nach einer vorteilhaften Ausgestaltung kann das Transportfahrzeug eine Klemmvorrichtung aufweisen, damit die Hängeware während der Fahrt und/oder beim Ein- und/oder Auslagern nicht flattert und in Kontakt mit anderen Transportfahrzeugen oder der Lagerstruktur kommt. Diese Klemmvorrichtung kann entweder stationär am Transportfahrzeug oder am vorzugsweise als Greifer ausgebildeten Lastaufnahmemittel des Transportfahrzeugs befestigt werden. Bei einer Befestigung am Transportfahrzeug ist der Vorteil, dass auch während der Ein- und/oder Auslagerung ein Flattern vermieden wird. Die Klemmvorrichtung kann während der Bewegungen der Hängeware geschlossen sein. Mit anderen Worten wird die Hängeware vor dem Bewegen des Trägers derart mit der Klemmvorrichtung festgeklemmt, dass sie während der Fahrt und/oder beim Ein- und/oder Auslagern nur noch begrenzt flattern oder in Rotationsrichtung um den Träger herum nachschwenken kann. Die Gefahr, dass Hängeware an Teilen und/oder Elementen des Lager- und Entnahmesystems hängen bleiben oder den Betrieb auf andere Weise stören, ist somit stark verringert.

Die Klemmvorrichtung kann Klappen aufweisen und die Hängeware während der Handhabung mit den Klappen arretieren. Sind die Hängewaren eingelagert, so kann die Klemmvorrichtung gelöst werden. Daraufhin sind die Hängewaren frei schwenkbar. Mit den Klappen kann sichergestellt werden, dass frei schwenkbare Hängewaren keine benachbarten Schächte stören können und auch nach längerer Lagerzeit noch sicher mit dem Lastaufnahmemittel gegriffen werden können. Der Greifer des Transportfahrzeugs kann eine motorisierte Mechanik für die Klemmvorrichtung aufweisen. Werden die Träger von oben gegriffen, kann nach einer vorteilhaften Weiterbildung darauf verzichtet werden, die Klappen zu motorisieren. Stattdessen können in der Lagersäule beziehungsweise im Schacht Einführschrägen vorgesehen sein. Die Einführschrägen können die Hängeware beim Absenken des Trägers automatisch zusammenführen. Die Fixierung der Hängeware mit den Klappen sollte dabei locker und nicht zu fest sein. Mit anderen Worten sollten die Klappen die Hängeware lediglich begrenzen und nicht so fest fixieren, dass beim Öffnen und oder Schließen der Mechanik die Kleiderbügel von dem Träger gehoben werden.

Als Alternative zu der beschriebenen Klemmvorrichtung kann eine Umhausung des Greiferbereichs von einer Oberkante des Transportfahrzeugs bis hin zu einer Oberkante der Lagerstruktur beziehungsweise bis hin zu der Gitterstruktur vorgesehen sein. Die Umhausung würde also auch die Hängeware umhausen. Damit wäre ausgeschlossen, dass die Hängeware im Betrieb an einem benachbarten oder vorbeifahrenden Transportfahrzeug hängen bleibt, woraus sich Defekte an der Hängeware oder am Transportfahrzeug ergeben könnten.

Als weitere Alternative kann eine Sicherung der Hängeware durch eine umhüllende Folie erfolgen, welche wie ein Sack von oben über die Hängeware gestülpt wird. Hierbei kann es sich um eine mehrfach nutzbare Folie handeln, welche dauerhaft beim Träger oder auch beim Transportfahrzeug verbleiben kann. In Arbeits- und/oder Übergabeplätzen kann die Folie bereits beim Absenken der Hängeware angehoben werden, wodurch für das Bedienpersonal ein direkter Zugriff auf die Hängeware möglich ist. Demgegenüber kann auch eine Einwegfolie genutzt werden, welche beim Einlagern automatisiert oder manuell über den Träger mitsamt Hängeware gestülpt wird. Die Folie kann nach dem Auslagern manuell entfernt und entsorgt werden. Diese Lösung bietet sich bei der Übergabe des gesamten beladenen Trägers an Endkunden an. Ein Beispiel hierfür wäre eine Pickup-Station einer Reinigung. Durch die Folie ist die Hängeware im Lager- und Entnahmesystem gegen Verschmutzung geschützt. Die Folie sollte eng genug anliegen, um große Verformungen der Hängewaren zu verhindern.

Im Hinblick auf eine besonders große Flexibilität des Betriebs und eine gesteigerte Kompatibilität des Lager- und Entnahmesystems wird ein entsprechend eingerichteter Übergabeplatz zur Übergabe von Hängeware zwischen einem Lager- und Entnahmesystem und einer Hängebahn eines Hängefördersystems vorgesehen sein.

Die direkte Übergabe der Träger vom Transportfahrzeug an das Hängefördersystem ist schwierig realisierbar, da sowohl die Hängebahn als auch das Transportfahrzeug von oben auf den Träger zugreifen. Daher wird ein Übergabeplatz vorgeschlagen, an welchem der Träger abgelegt und anschließend durch eine vorzugsweise als Greifer ausgebildete Übergabevorrichtung, beispielsweise auf eine Gondel der Hängebahn des Hängefördersystems, geladen werden kann. Dadurch wird auch das Lager- und Entnahmesystem von der Hängebahn entkoppelt. Mit anderen Worten erfüllt der Übergabeplatz auch eine Pufferfunktion und dient als Pufferplatz.

Vorzugsweise umfasst der Übergabeplatz eine Haltevorrichtung, die mindestens eine erste Aufnahme aufweist und eingerichtet ist, um mindestens einen Träger zum Einhängen von Hängeware aufzunehmen. Je nach Ausgestaltung der Haltevorrichtung können auch zwei oder mehr Träger gleichzeitig in die Aufnahme aufgenommen werden. Weiter kann der Übergabeplatz eine Übergabevorrichtung umfassen, die eingerichtet ist, um den Träger von dem Lager- und Entnahmesystem zu der Hängebahn und/oder andersherum zu überführen. Zusätzlich kann der Übergabeplatz mindestens eine der Hängebahn zugeordnete zweite Aufnahme umfassen, die eingerichtet ist, um mindestens einen Träger zum Einhängen von Hängeware aufzunehmen. Auch die Hängebahn kann eingerichtet sein, um gleichzeitig oder nach einander mehrere Träger aufzunehmen.

Die Haltevorrichtung für den Träger entkoppelt dabei die Bewegung des Transportfahrzeugs und des Hängefördersystems. Das Transportfahrzeug kann mit seinem Lastaufnahmemittel den Träger auf die Haltevorrichtung abgeben oder andersherum den Träger von der Haltevorrichtung aufnehmen. Die übergebene Hängeware kann in der Haltevorrichtung verbleiben, während das Transportfahrzeug bereits den nächsten Auftrag ausführen kann. Die Übergabevorrichtung kann ebenfalls eine Aufnahme aufweisen, die eingerichtet ist, um mindestens einen Träger zum Einhängen von Hängeware aufzunehmen. Die Aufnahme der Übergabevorrichtung kann als vorzugsweise aktiver Greifer ausgebildet sein. Dabei kann die angetriebene Greifeinheit den Träger fassen und loslassen.

Nach einer Ausführungsform kann die Übergabevorrichtung den Träger in einer translatorischen Bewegung zwischen dem Lager- und Entnahmesystem und der Hängebahn des Hängefördersystems überführen. Die translatorische Bewegung kann von einem Motor bewirkt werden. Nach einer anderen Ausführungsform kann die Übergabevorrichtung den Träger in einer Schwenkbewegung zwischen dem Lager- und Entnahmesystem und der Hängebahn des Hängefördersystems überführen. Dabei kann die Übergabevorrichtung als Schwenkeinheit ausgebildet sein und den Träger von der Haltevorrichtung aufnehmen und an eine zu diesem Zeitpunkt stehende Hängebahn überführen und übergeben oder andersherum. Die Schwenkeinheit kann von einem Motor rotiert werden.

Im Hinblick auf eine besonders große Flexibilität des Betriebs und eine gesteigerte Kompatibilität des Lager- und Entnahmesystems wird darüber hinaus ein entsprechender Träger zum Einhängen von Hängeware für ein Lager- und Entnahmesystem vorgeschlagen. Der Träger kann auf vielfältige Weise ausgebildet sein, um auf vorteilhafte Weise zusammen mit dem beschriebenen Lager- und Entnahmesystem verwendbar zu sein. Beispielsweise kann eine einseitige Beladung des Trägers durch ein Verrutschen der Hängeware vermieden werden, wenn der Träger mit Scheiben in Segmente unterteilt ist. Absätze an den Enden der Kleiderstange können alternativ oder zusätzlich den für Kleiderbügel etc. der Hängeware nutzbaren Bereich des Trägers begrenzen.

Für einen vorteilhaften Betrieb des beschriebenen Lager- und Entnahmesystems, des beschriebenen Arbeitsplatzes, des beschriebenen Transportfahrzeugs und/oder des beschriebenen Übergabeplatzes wird schließlich ein Verfahren vorgeschlagen, bei welchem Hängeware in mindestens einen Träger zur Lagerung eingehängt und/oder zur Entnahme ausgehängt wird.

Gemäß einer vorteilhaften Weiterbildung des Verfahrens, insbesondere zum Betreiben von Lager- und Entnahmesystem, Transportfahrzeug und Übergabeplatz, kann Hängeware von dem Lager- und Entnahmesystem an eine Hängebahn eines Hängefördersystems übergeben werden. Diese Übergabe kann an dem Übergabeplatz stattfinden und die folgenden Schritte umfassen:
a1) Übergabe des Trägers von dem Transportfahrzeug an eine Haltevorrichtung des Übergabeplatzes, vorzugsweise von einem Lastaufnahmemittel des Transportfahrzeugs an eine erste Aufnahme der Haltevorrichtung;
b1) Übergabe des Trägers von der Haltevorrichtung des Übergabeplatzes an eine Übergabevorrichtung des Übergabeplatzes, vorzugsweise mittels eines der Übergabevorrichtung zugeordneten aktiven Greifers;
c1) Überführen des Trägers von der Haltevorrichtung zu der Hängebahn; und
d1) Übergabe des Trägers von der Übergabevorrichtung an die Hängebahn, vorzugsweise an einer der Hängebahn zugeordnete zweite Aufnahme.

Dabei kann die Ware auch vom Bedienpersonal in den Träger eingehängt werden, während der Träger nach Schritt a1) in der Haltevorrichtung, die vorzugsweise in einem Steher einer Lagersäule befestigt werden kann, abgelegt ist.

Andersherum wird gemäß einer weiteren vorteilhaften Weiterbildung des Verfahrens, insbesondere zum Betreiben von Lager- und Entnahmesystem, Transportfahrzeug und Übergabeplatz, vorgeschlagen, dass Hängeware von der Hängebahn des Hängefördersystems an das Lager- und Entnahmesystem übergeben wird. Diese Übergabe kann an dem Übergabeplatz stattfinden und die folgenden Schritte umfassen:
a2) Übergabe des Trägers von der Hängebahn, vorzugsweise von einer der Hängebahn zugeordneten zweiten Aufnahme, an eine Übergabevorrichtung des Übergabeplatzes, vorzugsweise mittels eines der Übergabevorrichtung zugeordneten aktiven Greifers;
b2) Überführen des Trägers von der Hängebahn zu einer Haltevorrichtung des Übergabeplatzes;
c2) Übergabe des Trägers von der Übergabevorrichtung an die Haltevorrichtung, vorzugsweise an eine erste Aufnahme der Haltevorrichtung; und
d2) Übergabe des Trägers von der Haltevorrichtung an das Transportfahrzeug.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnungen zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer perspektivischen Darstellung eine Ausführungsform eines Transportfahrzeugs auf einer Gitterstruktur eines Lager- und Entnahmesystems,
- Fig. 2: in einer perspektivischen Darstellung einen oberen Bereich des Transportfahrzeugs aus Fig. 1 mit ausgefahrenem Ausleger und aufgenommenem Träger,
- Fig. 3: in einer perspektivischen Darstellung das Transportfahrzeug aus Fig. 1, das einen Träger in eine Lagerstruktur des Lager- und Entnahmesystems herablässt,
- Fig. 4: in einer Draufsicht eine erste Ausführungsform eines Trägers,
- Fig. 5: in einer Draufsicht eine zweite Ausführungsform eines Trägers,
- Fig. 6: in einer perspektivischen Darstellung die zweite Ausführungsform eines Trägers aus Fig. 5,
- Fig. 7: in einer schematischen seitlichen Ansicht eine als Leiste mit Sägezahnprofil ausgebildete Aufnahme mit eingehängtem Träger,
- Fig. 8: in einer Draufsicht eine dritte Ausführungsform eines Trägers,
- Fig. 9: in einer perspektivischen Darstellung die dritte Ausführungsform eines Trägers aus Fig. 8,
- Fig. 10: in einer perspektivischen Darstellung eine als Leiste ausgebildete Aufnahme für die Träger aus den Fig. 8 und Fig. 9,
- Fig. 11: in einer perspektivischen Darstellung einen Träger gemäß Fig. 8 und Fig. 9, der in einer Aufnahme aufgenommen ist,
- Fig. 12: in einer perspektivischen Darstellung einen Träger gemäß Fig. 8 und Fig. 9, der durch eine Ausnehmung in einer Aufnahme hindurch vertikal bewegbar ist,
- Fig. 13: in einer seitlichen Ansicht eine Lagerstruktur mit Trägern gemäß Fig. 8 und Fig. 9, die in Aufnahmen aufgenommen sind,
- Fig. 14: in einer perspektivischen Darstellung die dritte Ausführungsform eines Trägers aus Fig. 8 und Fig. 9 mit eingehängter Hängeware,
- Fig. 15: in einer perspektivischen Darstellung eine vierte Ausführungsform eines Trägers,
- Fig. 16: in einer perspektivischen Darstellung ein Träger gemäß Fig. 15, der in einer Aufnahme aufgenommen ist,
- Fig. 17: in einer seitlichen Schnittansicht ein Transportfahrzeug mit geschlossener Klemmvorrichtung und ein Transportfahrzeug mit geöffneter Klemmvorrichtung,
- Fig. 18: in einer perspektivischen Darstellung von schräg unten ein Transportfahrzeug mit geschlossener Klemmvorrichtung und ein Transportfahrzeug mit geöffneter Klemmvorrichtung,
- Fig. 19: in einer perspektivischen Darstellung das Transportfahrzeug aus Fig. 1 auf einer Gitterstruktur des erfindungsgemäßen Lager- und Entnahmesystems sowie einen Arbeitsplatz des Lager- und Entnahmesystems,
- Fig. 20: in einer perspektivischen Darstellung und in einer perspektivischen Schnittdarstellung von schräg oben sowie in einer perspektivischen Darstellung von schräg unten den Arbeitsplatz aus Fig. 19 mit einer Abdeckung in einer geschlossenen Position,
- Fig. 21: in einer perspektivischen Darstellung und in einer perspektivischen Schnittdarstellung von schräg oben sowie in einer perspektivischen Darstellung von schräg unten den Arbeitsplatz aus Fig. 19 mit der Abdeckung in einer geöffneten Position,
- Fig. 22: in einer perspektivischen Schnittdarstellung den Arbeitsplatz aus Fig. 19 mit der Abdeckung in der geschlossenen und in der geöffneten Position,
- Fig. 23: in einer Draufsicht eine Übergabe gemäß Schritt a1) oder a2),
- Fig. 24: in einer Draufsicht eine Übergabe gemäß Schritt b1) oder b2) und ein Überführen gemäß Schritt c1) oder c2),
- Fig. 25: in einer Draufsicht eine Übergabe gemäß Schritt d1) oder d2),
- Fig. 26: in einer perspektivischen Darstellung eine Übergabe gemäß Schritt a1) oder a2),
- Fig. 27: in einer perspektivischen Darstellung eine Übergabe gemäß Schritt b1) oder b2) und ein Überführen gemäß Schritt c1) oder c2),
- Fig. 28: in einer perspektivischen Darstellung eine Übergabe gemäß Schritt d1) oder d2),
- Fig. 29: ein Ablaufdiagramm eines Verfahrens von Hängeware von einem Lagerund Entnahmesystem an eine Hängebahn eines Hängefördersystems an einem Übergabeplatz und
- Fig. 30: ein Ablaufdiagramm eines Verfahrens von Hängeware von einer Hängebahn eines Hängefördersystems an ein Lager- und Entnahmesystem an einem Übergabeplatz.

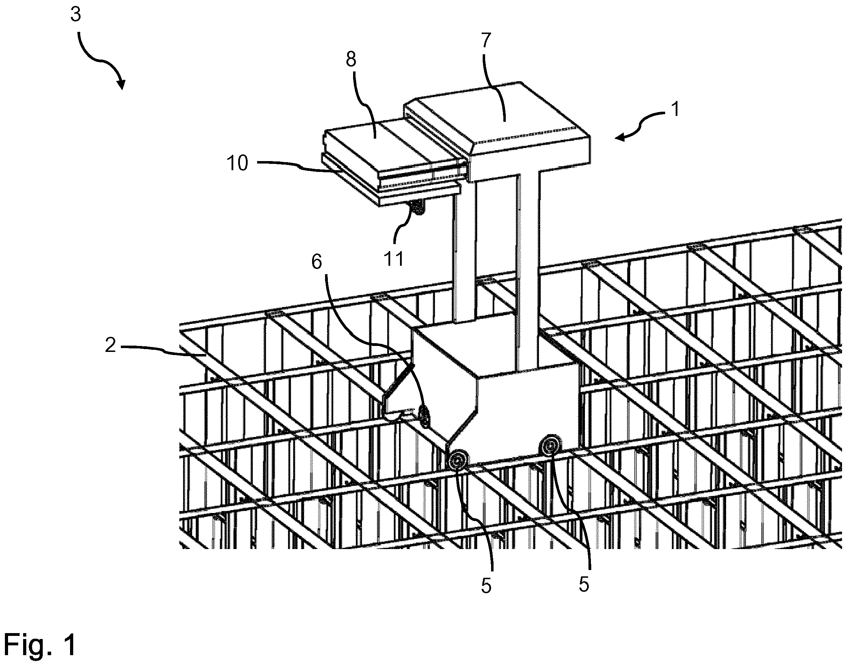

Fig. 1 zeigt in einer perspektivischen Darstellung eine Ausführungsform eines Transportfahrzeugs 1 auf einer Gitterstruktur 2 eines Lager- und Entnahmesystems 3. Zur Fortbewegung auf der Gitterstruktur 2 des Lager- und Entnahmesystems 3 hat das Transportfahrzeug 1 Räder 5, 6 in Längsrichtung und in Querrichtung. Das Transportfahrzeug 1 hat ein Dach 7 mit einem Ausleger 8. An dem Ausleger 8 ist ein als Greifer 10 ausgebildetes Lastaufnahmemittel für Träger 11 angeordnet. Mit seinem Greifer 10 kann das Transportfahrzeug 1 den Träger 11 greifen und den gegriffenen Träger 11 entlang der Gitterstruktur des Lager- und Entnahmesystems 3 transportieren.

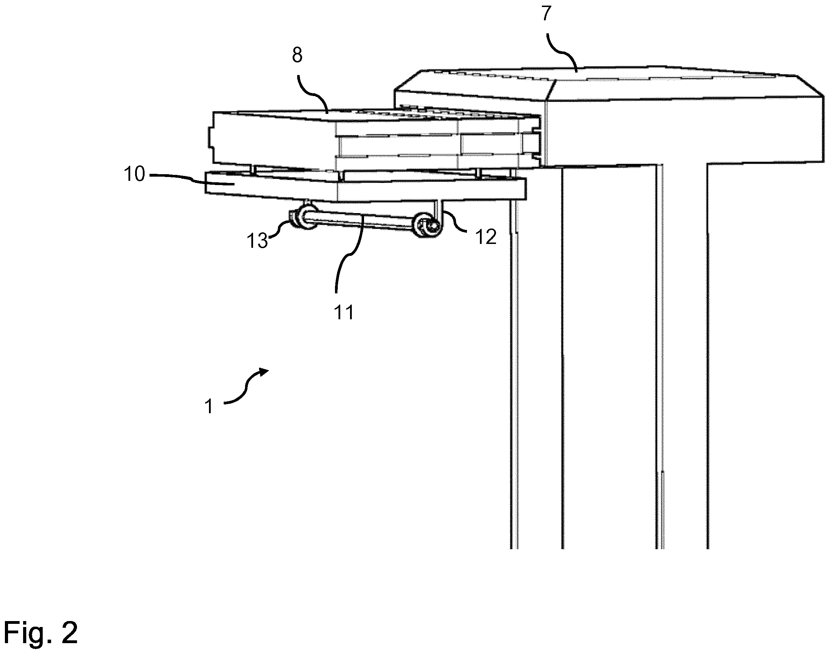

Fig. 2 zeigt in einer perspektivischen Darstellung einen oberen Bereich des Transportfahrzeugs 1 aus Fig. 1 mit ausgefahrenem Ausleger 8 und aufgenommenem Träger 11. Das als Greifer 10 ausgebildete Lastaufnahmemittel für Träger 11 umfasst hakenförmige Aufnahmen 12, 13.

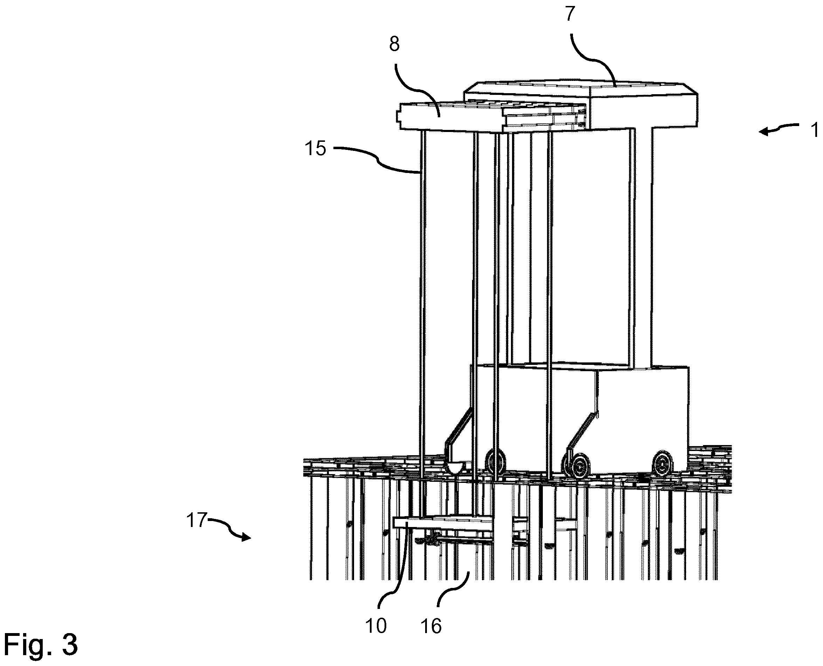

In Fig. 3 ist in einer perspektivischen Darstellung das Transportfahrzeug 1 aus Fig. 1 mit ausgefahrenem Ausleger 8 zu sehen. Das als Greifer 10 ausgebildete Lastaufnahmemittel ist mittels Bändern 15 in eine Lagersäule 16 der Lagerstruktur 17 herabgelassen, um den Träger - der hier beispielhaft nicht mit Hängeware beladen sondern unbeladen dargestellt ist - einzulagern. Die Bänder können vorzugsweise als Stahlbänder ausgebildet sein. Die Höhe eines Greifers 10 kann über einen in einem Hubmotor üblicherweise verwendeten Inkrementaldrehgeber bestimmt werden, der verwendet wird, um gezielt eine bestimmte Höhe mit dem Greifer 10 anzufahren. Die Hubbewegung ist grundsätzlich nicht schlupfbehaftet, denn die Schwerkraft spannt die Bänder 15 oder Seile, an denen der Greifer 10 hängt, vor. Die Hubwelle(n), welche die Bänder oder Seile auf- und abwickeln, können dabei formschlüssig mit dem Hubmotor verbunden sein, zum Beispiel mittels Zahnriemen und Zahnriemenscheibe, wobei Letztere mit einer Passfeder auf der Motorwelle sitzen kann.

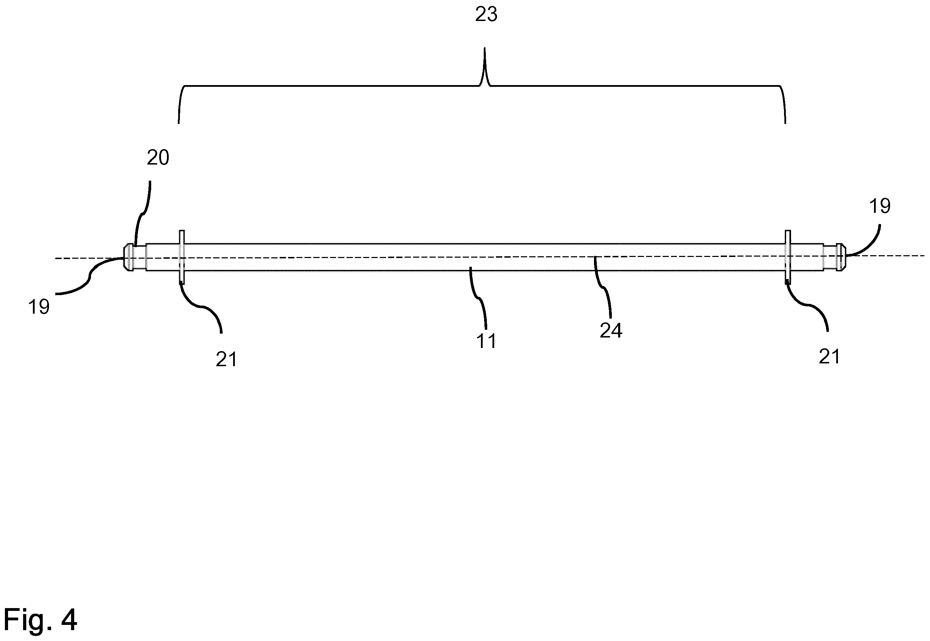

Eine erste Ausführungsform eines Trägers 11 ist in Fig. 4 zu sehen. Der Träger 11 ist als Kleiderstange mit rundem Querschnitt ausgebildet. An den Enden 19 des Trägers sind Stufen ausgebildet, so dass der Träger 11 umfängliche Ausnehmungen 20 ausgebildet. Insbesondere sind die Ausnehmungen 20 an die als Haken ausgebildeten Aufnahmen am Greifer des Transportfahrzeugs (in Fig. 4 nicht dargestellt) angepasst, so dass der Träger formschlüssig gegriffen werden kann und nicht verrutschen kann. Zusätzlich sind an beiden Enden 19 jeweils Scheiben 21 auf den Träger aufgebracht. Die Scheiben 21 verhindern, dass Hängewaren, die insbesondere unter Verwendung von Kleiderbügeln in den Träger 11 eingehängt werden, im Betrieb bis zu den Enden 19 des Trägers 11 verrutschen können. Vielmehr ist der Bereich 23, in welchem die Hängewaren in Richtung der Trägerlängsachse 24 verrutschen können, durch die Scheiben 21 begrenzt.

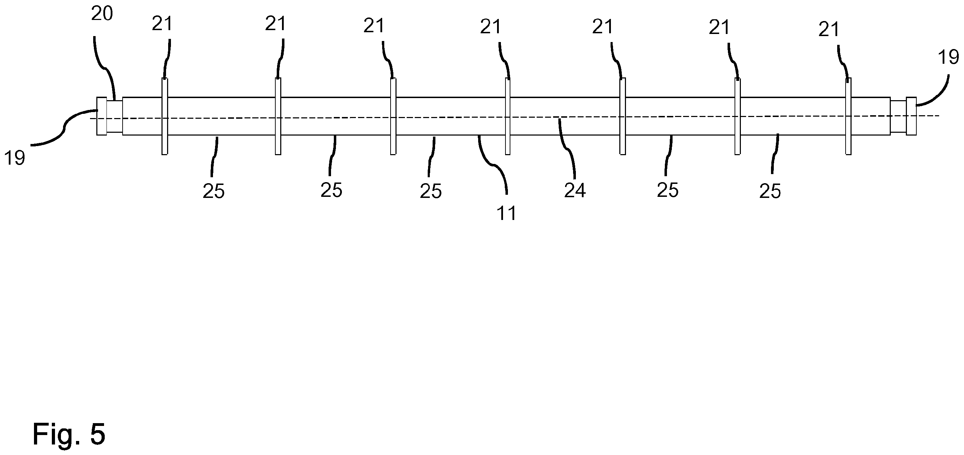

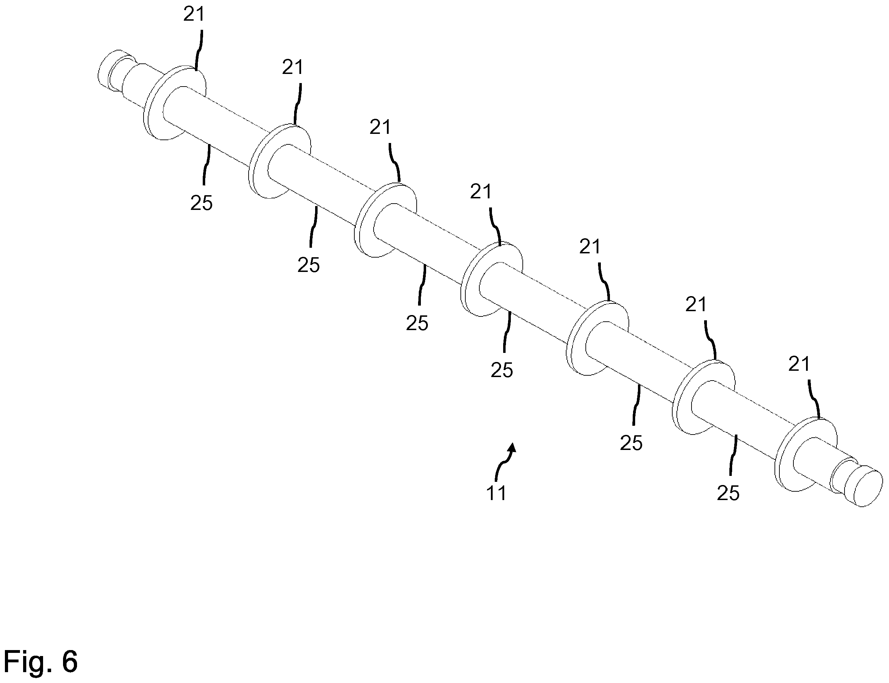

In Fig. 5 und Fig. 6 ist eine zweite Ausführungsform eines Trägers 11 zu sehen. Diese zweite Ausführungsform unterscheidet sich dadurch von der in Fig. 4 abgebildeten ersten Ausführungsform, dass der Träger 11 bei der zweiten Ausführungsform gemäß Fig. 5 und Fig. 6 in Richtung der Trägerlängsachse 24 weitere Scheiben 21 zur Unterteilung des Trägers 11 in Segmente 25 aufweist. Die Scheiben 21 verhindern im Betrieb ein Verrutschen der Hängeware. Indem die Segmente 25 in etwa gleichmäßig mit Hängeware bestückt werden, kann zudem eine einseitige Beladung des Trägers 11 verhindert werden. Die Gewichtsverteilung an dem Träger 11 kann im Betrieb des Lager- und Entnahmesystems 3 zusätzlich mit Sensoren geprüft oder überwacht werden. Hierbei kommen insbesondere optische Sensoren oder Kraft- beziehungsweise Drucksensoren zur Ermittlung des Gewichts in den Auflagerpunkten des Trägers/in den Aufnahmen in Betracht. Somit ist die Gefahr einer stark einseitigen Beladung erheblich reduziert. Dabei kann das Lager- und Entnahmesystem eine Benutzerschnittstelle aufweisen, an der ein Dialog mit dem Bedienpersonal, insbesondere mit dem Kommissionierer, durchgeführt wird, wobei der Kommissionierer vorzugsweise dynamisch angeleitet wird und beispielsweise ein Umhängen der Hängeware an dem Träger 11 für eine gleichmäßigere Beladung ermöglicht wird. Die Unterteilung des Trägers 11 in Segmente 25 verhindert dabei ein Verrutschen, so dass der gleichmäßig beladene Träger 11 diesen Zustand beibehält.

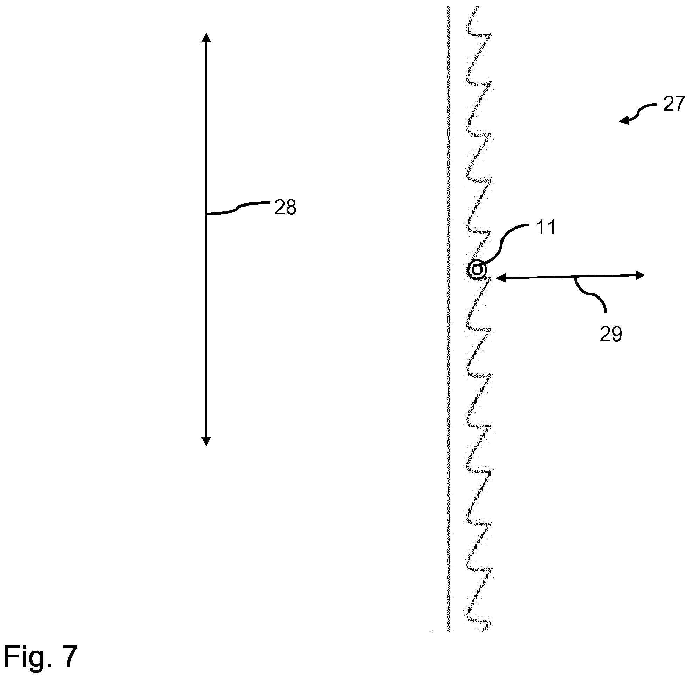

In Fig. 7 ist eine als Sägezahnprofil ausgebildete Aufnahme 27 zu sehen. Dabei ist die Aufnahme als eine sich in Vertikalrichtung 28 erstreckende Leiste ausgebildet. Die Leiste kann auf einer Vertikalstrebe in der Lagersäule angeordnet werden. Die Leiste kann vorzugsweise in Längsrichtung oder in Querrichtung im Wesentlichen mittig zwischen zwei Stehern der Lagerstruktur (in Fig. 7 nicht dargestellt) angeordnet werden. Bei Verwendung einer als Sägezahnprofil ausgebildeten Aufnahme 27 sollte ein Lastaufnahmemittel, das der Gitterstruktur oder vorzugsweise dem Transportfahrzeug zugeordnet ist - beispielsweise ein Greifer 10 - in der Lage sein, den Träger 11 in Vertikalrichtung 28 herabzulassen, und den Träger 11 dann seitlich in Horizontalrichtung 29 zu verschieben und in das Sägezahnprofil einzuführen und daraufhin die Verbindung zum Träger 11 zu trennen. Beispielhaft ist in Fig. 7 ein Träger 11 in einen der Zähne des Sägezahnprofils der Aufnahme eingehängt.

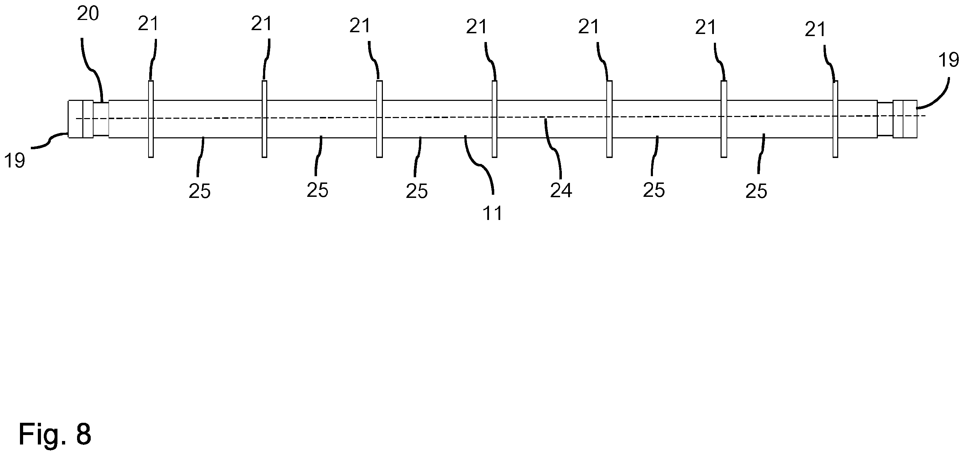

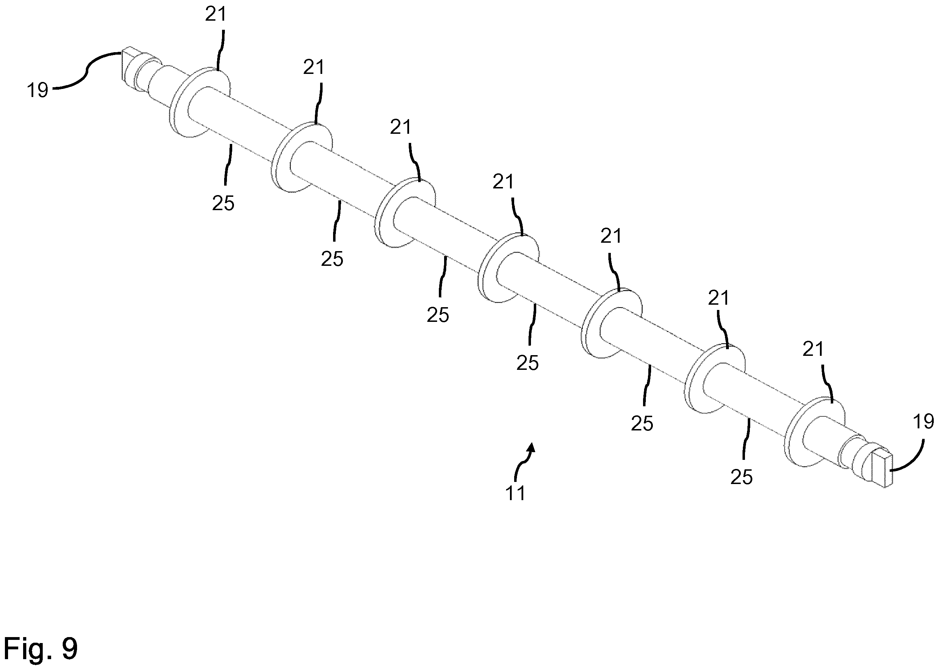

In Fig. 8 und Fig. 9 ist eine dritte Ausführungsform eines Trägers 11 zu sehen. Diese dritte Ausführungsform unterscheidet sich dadurch von der in Fig. 5 und Fig. 6 abgebildeten zweiten Ausführungsform, dass der Träger 11 bei der bei der dritten Ausführungsform gemäß Fig. 8 und Fig. 9 abgeplattete Enden 19 aufweist. Die abgeplatteten Enden 19 weisen einen rechteckförmigen Querschnitt mit zwei langen Seiten und zwei kurzen Seiten auf.

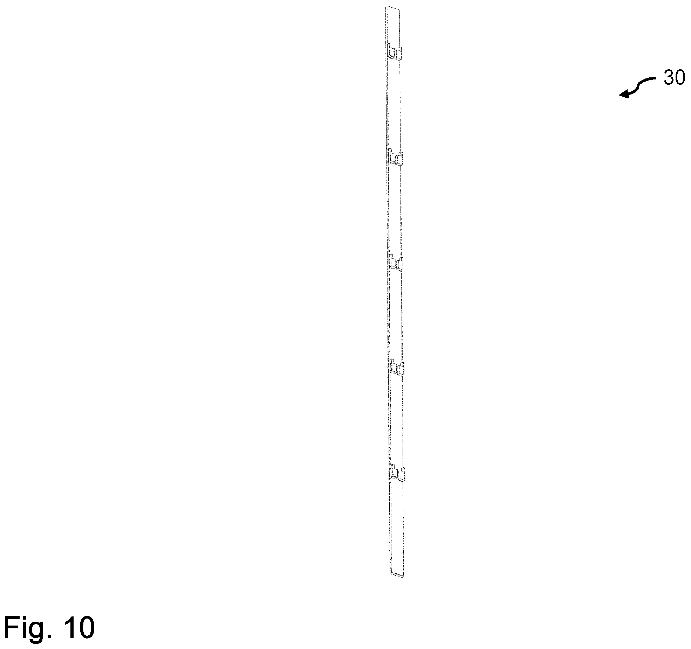

In Fig. 10 ist eine als Leiste ausgebildete Aufnahme 30 zu sehen, die für die Verwendung mit Trägern gemäß Fig. 8 und Fig. 9 geeignet ist.

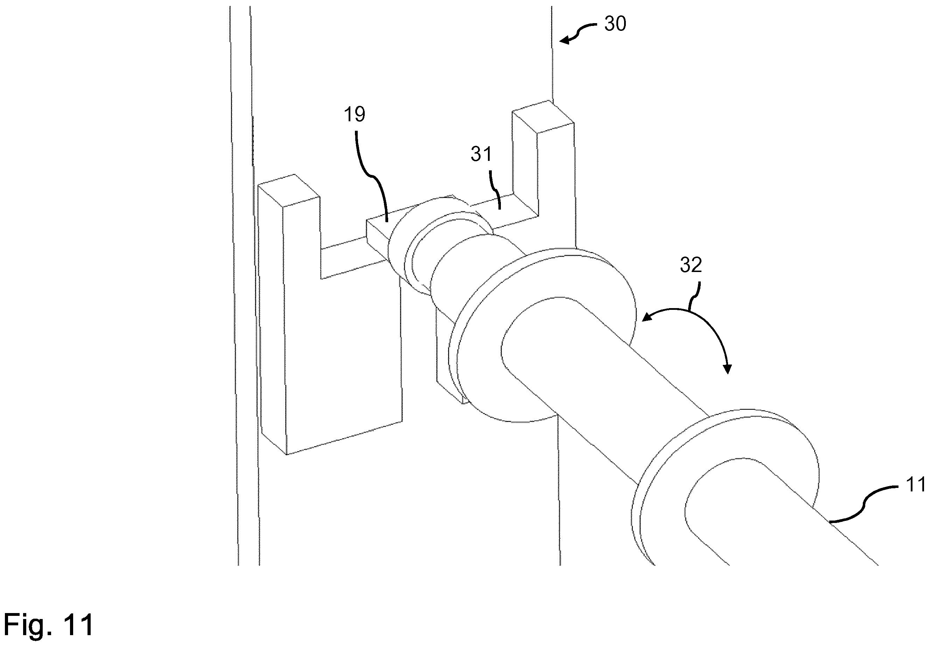

In Fig. 11 ist ein Ausschnitt der als Leiste ausgebildeten Aufnahme 30 aus Fig. 10 abgebildet. Ein Träger 11 gemäß der dritten Ausführungsform aus Fig. 8 und Fig. 9 befindet sich in einer ersten Pose und liegt mit seinem abgeplatteten Ende 19 - nämlich mit der langen Seite des rechteckförmigen Querschnitts - auf der Auflagefläche 31 auf. Das abgeplattete Ende 19 ist mit anderen Worten horizontal ausgerichtet beziehungsweise orientiert. Wird der Träger 11 vorzugsweise vom Lastaufnahmemittel um 90° in Rotationsrichtung 32 um seine Trägerlängsachse 24 gedreht - hierzu müsste er ausgehend von der in Figur 11 dargestellten Situation erforderlichenfalls leicht angehoben werden - so kann er in die zweite Pose gebracht werden. Hierzu kann das beispielsweise als Greifer 10 ausgebildete Lastaufnahmemittel in der Lage sein, den Träger in Rotationsrichtung 32 um seine Trägerlängsachse 24 zu drehen.

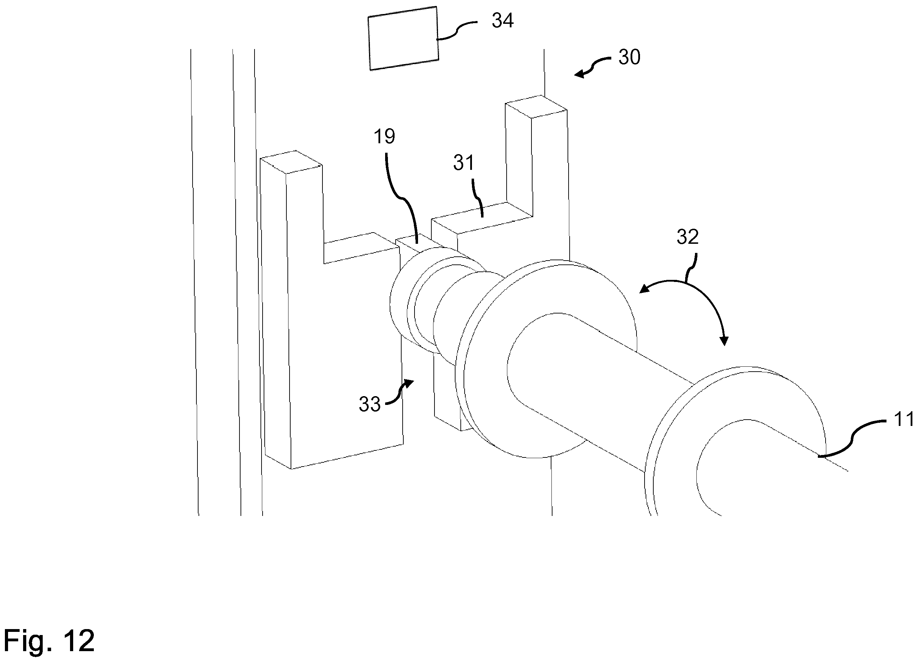

Fig. 12 zeigt den Ausschnitt der als Leiste ausgebildeten Aufnahme 30 und den Träger 11 in der zweiten Pose. Das abgeplattete Ende 19 ist vertikal ausgerichtet und liegt nicht auf der Auflagefläche 31 auf. Stattdessen ist der Träger 11 in der zweiten Pose durch eine Ausnehmung 33 hindurch vertikal bewegbar, denn die Ausnehmung 33 ist ein wenig größer als die kurze Seite des rechteckförmigen Querschnitts des abgeplatteten Endes 19 des Trägers. Durch die Ausnehmung 33 ist es - anders als bei der als Sägezahnprofil ausgebildeten Aufnahme gemäß Fig. 7 - nicht erforderlich, den Träger 11 am Lastaufnahmemittel seitlich in Horizontalrichtung 29 zu verschieben. Ist der Träger 11 in der zweiten Pose durch die Ausnehmung 33 in der Auflagefläche 31 der Aufnahme 30 hindurch vertikal bewegbar, so muss das Lastaufnahmemittel beziehungsweise der Greifer den Träger 11 nicht aktiv in der horizontalen Ebene verfahren können. Der Träger 11 kann in der ersten Pose von der Aufnahme 30 aufgenommen werden und in der zweiten Pose auf- und ab bewegt werden, beispielsweise, um in eine darüber oder darunter befindliche Aufnahme beziehungsweise in eine darüber oder darunter befindliche Auflagefläche 31 der Aufnahme 30 eingehängt zu werden, oder um aus der Lagersäule entnommen zu werden. Zudem ist in Fig. 12 ein an der Leiste 30 angeordneter Informationsträger 34 schematisch dargestellt. Der Informationsträger 34 ist innerhalb der Lagersäule angeordnet und umfasst Informationen in Bezug auf die Positionierung der Aufnahme beziehungsweise des Trägers innerhalb der Lagersäule. Insbesondere kann der Informationsträger mit einer dem Greifer 10 zugeordneten Ausleseeinheit ausgelesen werden.

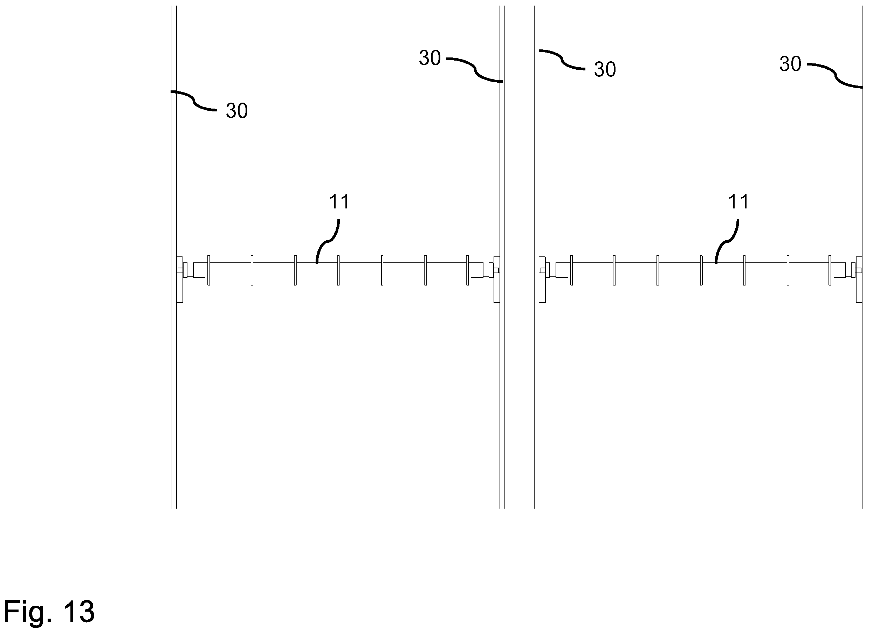

Fig. 13 zeigt zwei Träger 11 gemäß der dritten Ausführungsform aus Fig. 8 und Fig. 9, die sich in der zweiten Pose befinden und auf den Auflageflächen vierer Aufnahmen 30 aufliegen. Die beiden Träger befinden sich in benachbarten Lagersäulen.

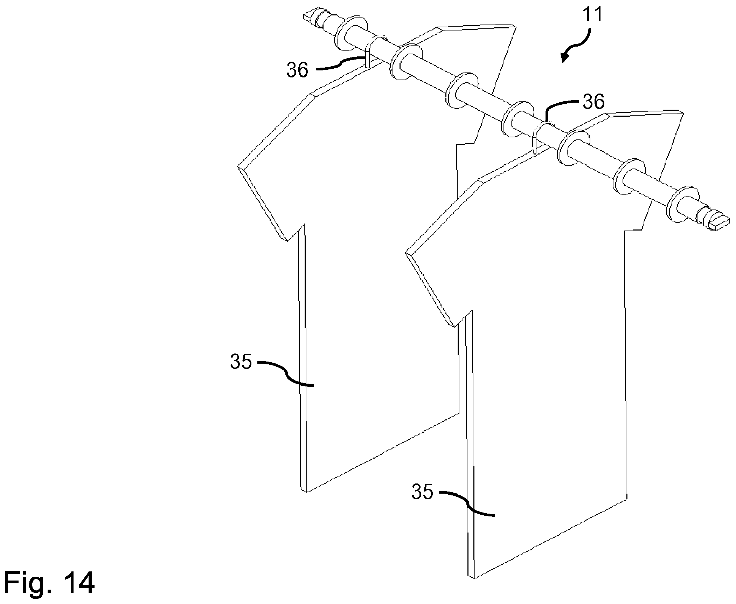

In Fig. 14 ist ein Träger 11 gemäß der dritten Ausführungsform aus Fig. 8 und Fig. 9 abgebildet. Beispielhaft ist Hängeware 35 dargestellt, nämlich in Gestalt stilisierter T-Shirts, die auf Kleiderbügeln hängen, wobei die Haken 36 der Kleiderbügel in den Träger 11 eingehängt sind.

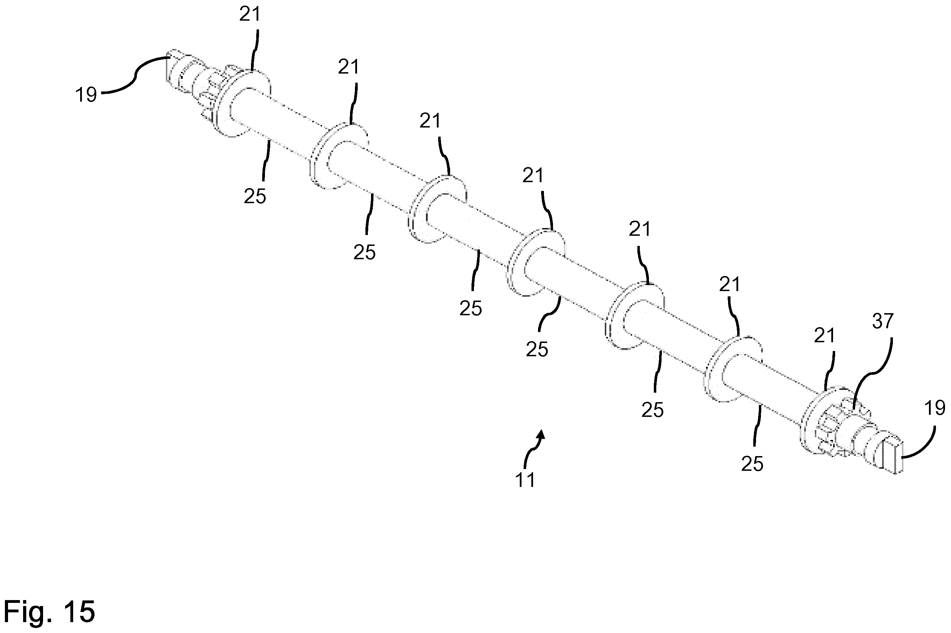

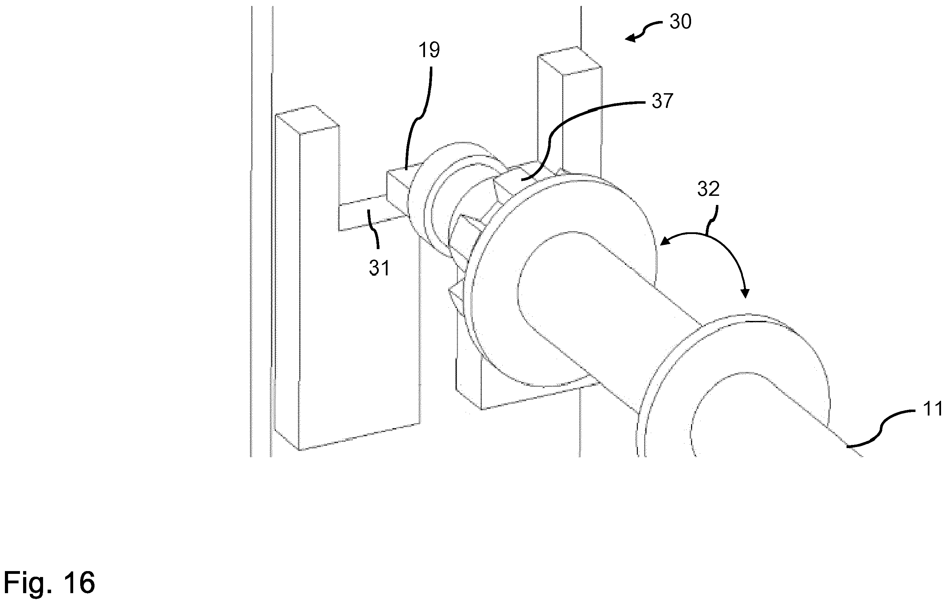

In Fig. 15 ist eine vierte Ausführungsform eines Trägers 11 zu sehen. Diese vierte Ausführungsform unterscheidet sich dadurch von der in Fig. 8 und Fig. 9 abgebildeten dritten Ausführungsform, dass der Träger 11 bei der vierten Ausführungsform gemäß Fig. 15 und Fig. 16 zusätzlich an beiden Enden 19 ein formschlüssiges Bauelement aufweist, nämlich ein Zahnrad 37. Das Zahnrad 37 kann mit einer Welle-Nabe-Verbindung - etwa einer Passfeder oder einem Spannsatz - auf dem Träger 11 angebracht sein und verwendet werden, um die Drehung des Trägers 11 um seine Trägerlängsachse 24 in Rotationsrichtung 32 zu bewirken. Das Zahnrad 37 kann formschlüssig mit einem entsprechend ausgebildeten und angetriebenen Riemen, einer Kette oder einem oder mehreren weiteren Zahnrädern eingreifen und auf diese Weise angesteuert werden. Der hierfür verwendete Antrieb kann beispielsweise dem Greifer zugeordnet sein.

Fig. 16 entspricht im Wesentlichen Fig. 11, allerdings ist in Fig. 16 ein Träger 11 gemäß der vierten Ausführungsform aus Fig. 15 in der ersten Pose dargestellt und liegt mit seinem abgeplatteten Ende 19 auf der Auflagefläche 31 auf.

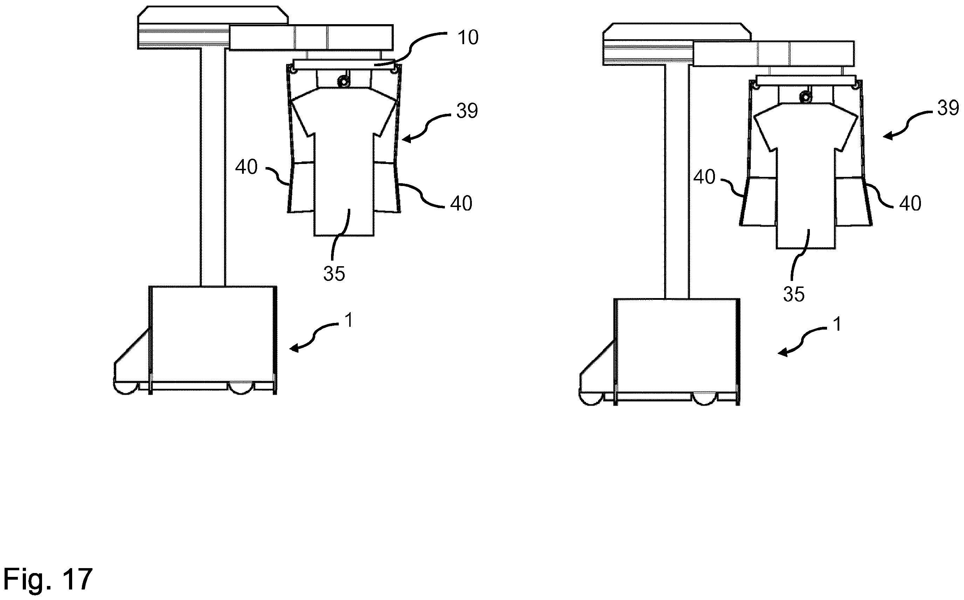

In Fig. 17 sind zwei Transportfahrzeuge 1 abgebildet. Die als Greifer 10 ausgebildeten Lastaufnahmemittel der Transportfahrzeuge 1 sind zusätzlich mit Begrenzungseinrichtungen versehen. Die Begrenzungseinrichtungen umfassen Klemmvorrichtungen 39. Die Klemmvorrichtungen 39 werden mit einer am Greifer 10 befindlichen motorisierten Mechanik angesteuert und weisen Klappen 40 auf. Die Klappen 40 weisen etwa oberhalb des untersten Drittels einen Knick auf, der an die Form der beispielhaft als T-Shirts ausgebildeten Hängeware 35 angepasst ist. Bei dem in Fig. 17 links abgebildeten Transportfahrzeug 1 befindet sich die Klemmvorrichtung 39 im geschlossenen Zustand, wobei die Fixierung der Hängeware 35 mit den Klappen 40 locker und nicht zu fest ist. Die Klappen 40 begrenzen die Hängeware 35 und verhindert ein Verrutschen, ein Verschmutzen beim Kontakt mit Teilen der Lagerstruktur 17 und ein Verhaken/Verklemmen beim Verfahren des Trägers 11. Die Fixierung ist dabei nicht so fest, dass beim Öffnen und oder Schließen der Mechanik die Haken 36 der Kleiderbügel von dem Träger 11 gehoben werden können.

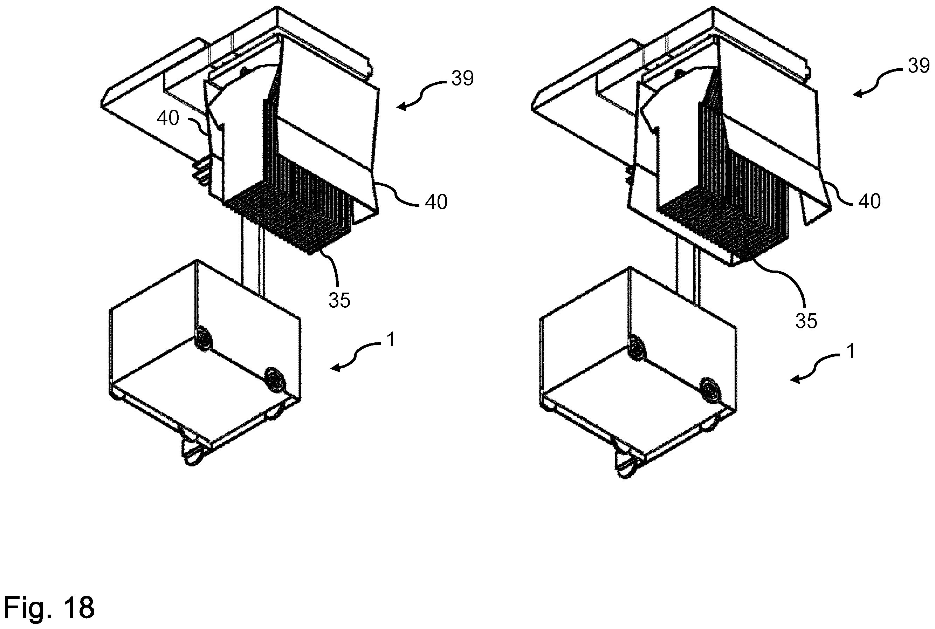

Fig. 18 entspricht Fig. 17, allerdings in einer perspektivischen Darstellung von schräg unten.

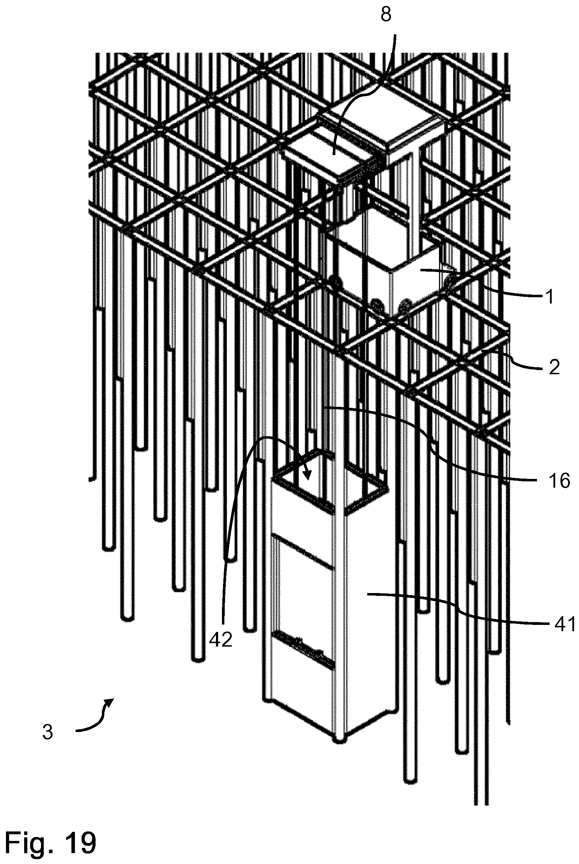

Fig. 19 zeigt in einer perspektivischen Darstellung einen Ausschnitt des Lager- und Entnahmesystems 3. Auf einer Gitterstruktur 2 des Lager- und Entnahmesystems 3 ist das Transportfahrzeug 1 in Längs- und/oder Querrichtung verfahrbar. Der Ausleger 8 ist aus dem Dach 7 des Transportfahrzeugs 1 ausgefahren und hat einen Träger (in Fig. 19 nicht erkennbar) in die Lagersäule 16 hinabgelassen. Unten in der Lagersäule 16 befindet sich ein Arbeitsplatz 41 für das Lager- und Entnahmesystem 3. An dem Arbeitsplatz 41 kann der in die Lagersäule 16 hinabgelassener Träger für das Bedienpersonal zugänglich gemacht werden, sofern sich der Träger in einem Schacht 42 des Arbeitsplatzes 41 in einer Lager- und Entnahmeposition befindet.

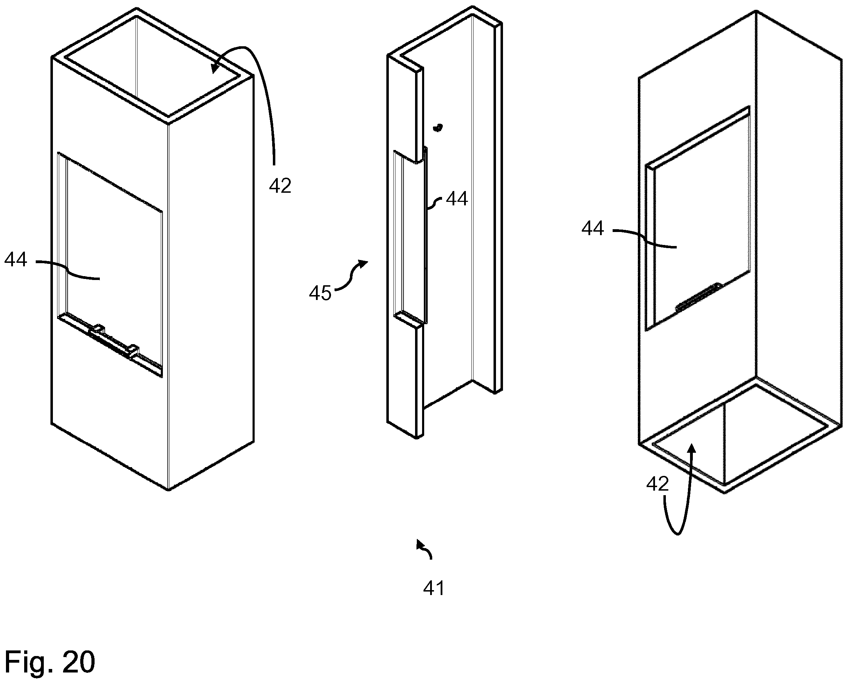

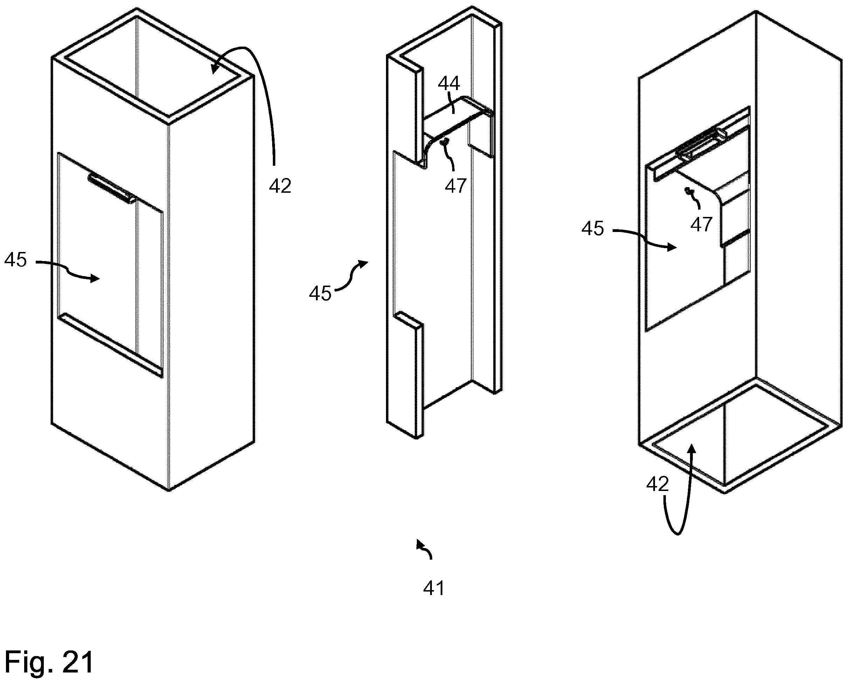

Die Zugänglichmachung des Trägers erfolgt durch eine Abdeckung 44, wie anhand der Fig. 20 und Fig. 21 verdeutlicht wird. Fig. 20 und Fig. 21 zeigen den Arbeitsplatz 41, und zwar links in einer perspektivischen Darstellung von schräg oben, in der Mitte in einer perspektivischen Schnittdarstellung von schräg oben sowie rechts in einer perspektivischen Darstellung von schräg unten.

In Fig. 20 befindet sich die Abdeckung 44 in einer geschlossenen Position, in welcher der Träger für das Bedienpersonal nicht zugänglich ist. In der geschlossenen Position verläuft die Abdeckung 44 vertikal vor einer Zugangsöffnung 45 zum Schacht 42 im Arbeitsplatz 41. Somit verschließt die Abdeckung 44 die Zugangsöffnung 45.

In Fig. 21 hingegen befindet sich die Abdeckung 44 in einer geöffneten Position, in welcher das Innere des Schachts 42 am Arbeitsplatz 41 für das Bedienpersonal zugänglich ist. In Fig. 21 ist im Schacht 42 eine U-förmige Aufnahme 47 für Träger 11 gemäß der oben beschriebenen ersten beziehungsweise zweiten Ausführungsform gemäß Fig. 4 oder Fig. 5 und Fig. 6 ausgebildet, allerdings könnte der Arbeitsplatz auch mit anderen beschriebenen Aufnahmen und anderen Trägern kombiniert werden. Die Abdeckung 44 verläuft gemäß Fig. 21 nicht vertikal vor der Zugangsöffnung 45 für das Bedienpersonal, sondern verläuft teilweise horizontal und verschließt auf diese Weise den Schacht 42 nach oben hin. Insbesondere kann die Abdeckung beim Übergang von der geschlossenen Position in die geöffnete Position in Führungen geführt werden.

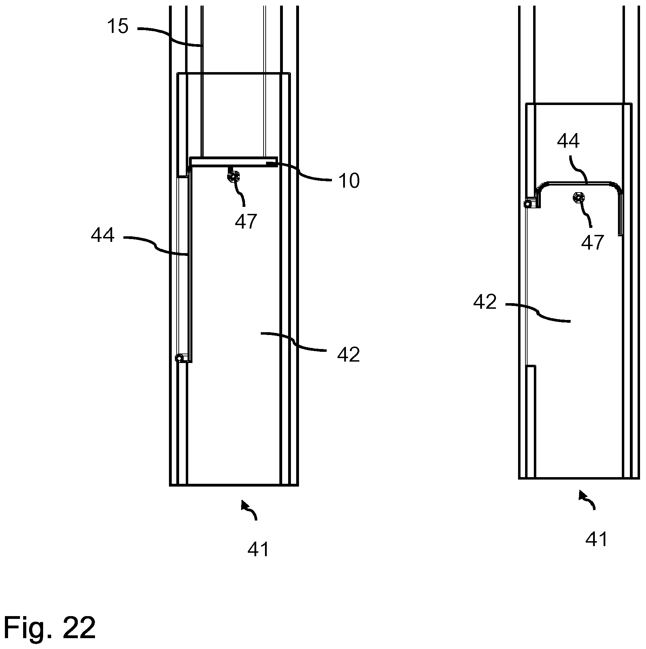

In Fig. 22 ist links ein Arbeitsplatz 41 mit einer Abdeckung 44 in der geschlossenen Position zu sehen. Von oben kann ein an Bändern 15 herabgelassener Greifer 10 auf die U-förmige Aufnahme 47 zugreifen und einen Träger einhängen oder entnehmen. In Fig. 22 rechts ist ein Arbeitsplatz 41 mit einer Abdeckung 44 in der geöffneten Position zu sehen. Die Abdeckung 44 verschließt den Schacht 42 nach oben hin. Ein von oben herabgelassener Greifer könnte nicht auf die Aufnahme 47 zugreifen.

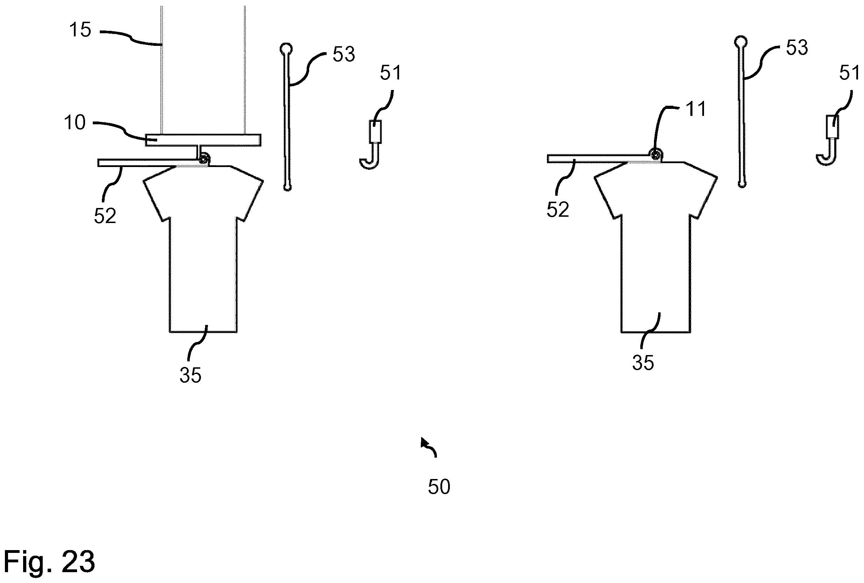

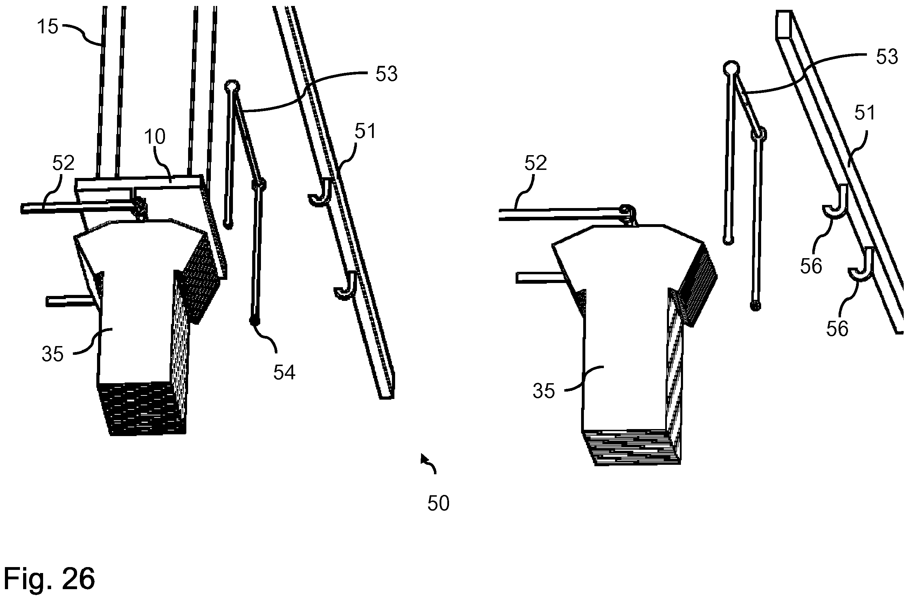

In den Fign. 23 bis 30 ist schließlich dargestellt, wie Hängeware 35 an einem Übergabeplatz 50 zwischen einem Lager- und Entnahmesystem 3 und einer Hängebahn 51 eines Hängefördersystems übergeben werden kann. Die Figuren 26 bis 28 entsprechen dabei den Fign. 23 bis 25, allerdings in einer perspektivischen Darstellung von schräg unten.

Der Übergabeplatz 50 umfasst eine Haltevorrichtung 52 und eine Übergabevorrichtung 53. Die Haltevorrichtung 52 weist zwei Aufnahmen 55 auf und ist eingerichtet, um einen Träger 11 zum Einhängen von Hängeware 35 aufzunehmen, indem die Enden 19 des Trägers in die Aufnahmen 55 eingehängt werden. Die Übergabevorrichtung 50 kann den Träger 11 von dem Lager- und Entnahmesystem 3 zu der Hängebahn 51 des Hängefördersystems und/oder andersherum überführen. Der Hängebahn 51 sind ebenfalls zwei Aufnahmen 56 zugeordnet, die eingerichtet sind, um mindestens einen Träger 11 zum Einhängen von Hängeware 35 aufzunehmen.

Zunächst wird im Folgenden ein Verfahren zur Übergabe von Hängeware dem einem Lager- und Entnahmesystem an die Hängebahn 51 des Hängefördersystems an dem Übergabeplatz 50 beschrieben.

In Fig. 23 links ist gemäß einem Schritt a1) zu sehen, wie ein Träger 11 von einem Transportfahrzeug - genauer von einem an Bändern 15 herabgelassenen Greifer 10 des Transportfahrzeugs - an eine Haltevorrichtung 52 des Übergabeplatzes 50 übergeben wird. Aus Fig. 26 wird ersichtlich, dass die Haltevorrichtung 52 zwei Aufnahmen 55 aufweist. Der Greifer 10 legt den Träger 11 in die Aufnahmen 55 der Haltevorrichtung 52. Ferner ist eine Hängebahn 51 sowie eine sich in einer Ruheposition befindliche Übergabevorrichtung zu sehen. Die Übergabevorrichtung 53 ist als Schwenkeinheit ausgebildet. Die Übergabevorrichtung 53 ist um ihre Achse schwenkbar und weist zwei Arme auf, an deren Enden jeweils eine Aufnahme für den Träger angeordnet ist. Die Aufnahme ist als aktiver Greifer 54 zum Greifen des Trägers 11 ausgebildet. Die aktiven Greifer 54 umfassen je eine angetriebene Greifeinheit, mit welcher die Greifer 54 den Träger 11 an den Enden 19 des Trägers 11 fassen und loslassen können.

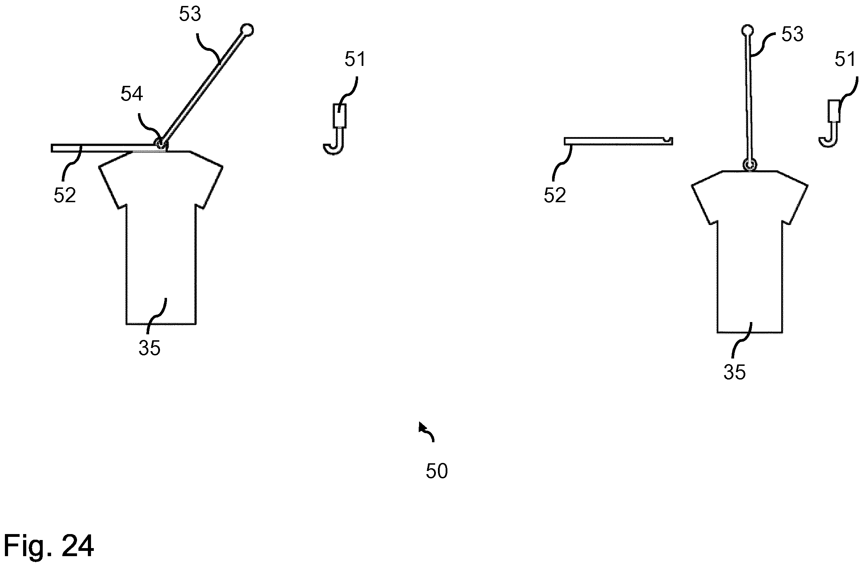

In Fig. 23 rechts ist die Situation nach Abschluss von Schritt a1) zu sehen. Der Träger 11 liegt in den Aufnahmen 55 der Haltevorrichtung 52. Der dem Transportfahrzeug zugeordnete Greifer 10 ist an den Bändern 15 hinaufgezogen worden und nicht mehr zu sehen. In Fig. 24 links ist gemäß einem Schritt b1) zu sehen, wie der Träger 11 von der Haltevorrichtung 52 des Übergabeplatzes 50 an die Übergabevorrichtung 53 des Übergabeplatzes 50 übergeben wird. Dabei greift der aktive Greifer 54 den in den Aufnahmen 55 der Haltevorrichtung 55 liegenden Träger 11.

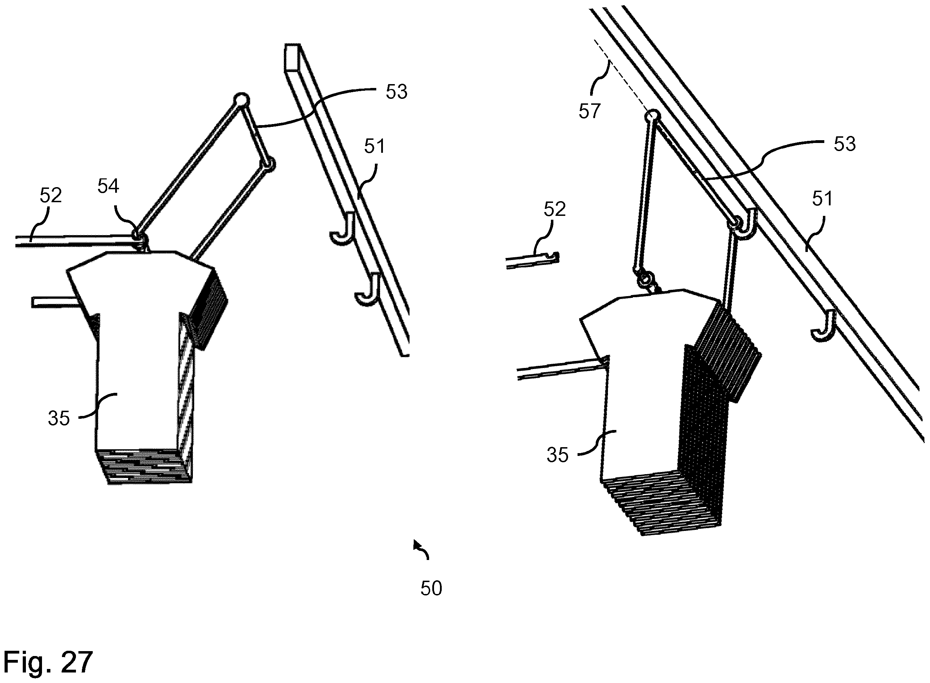

In Fig. 24 rechts ist gemäß einem Schritt c1) zu sehen, wie der Träger 11 von der Haltevorrichtung 52 hin zu der Hängebahn 51 überführt wird. Dabei schwenkt die Übergabevorrichtung 53 um ihre Achse 57 - siehe Fig. 27 - und bewegt den Träger von der Haltevorrichtung 52 in Richtung der Hängebahn 51.

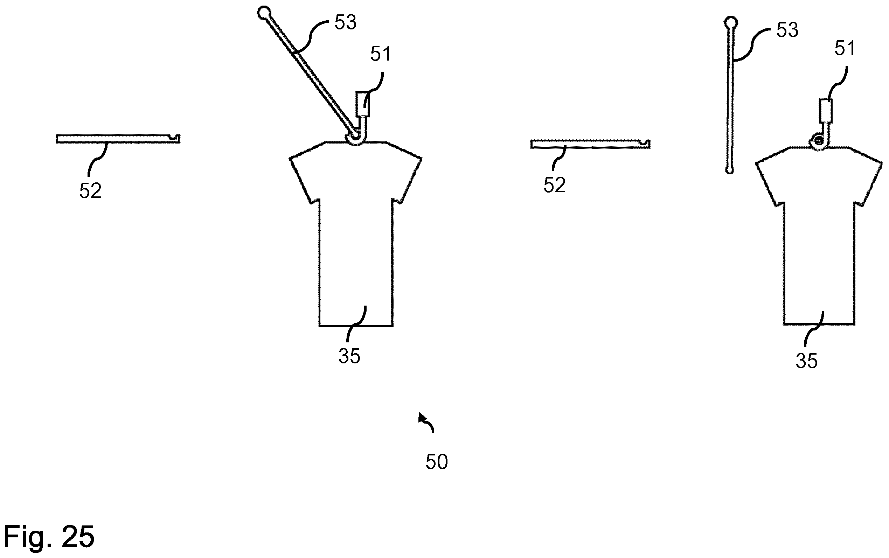

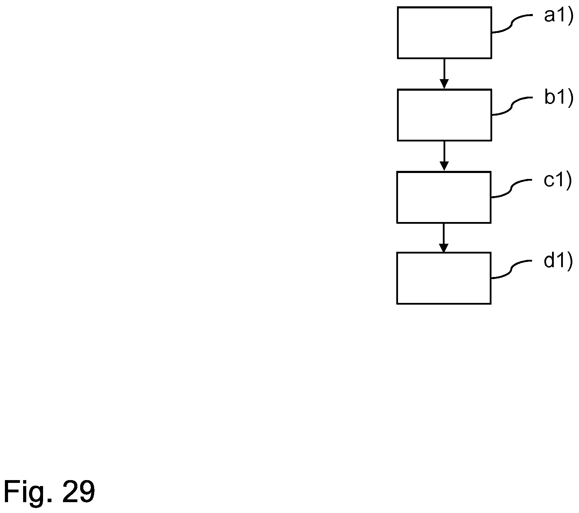

In Fig. 25 links ist schließlich gemäß einem Schritt d1) zu sehen, wie der Träger 11 von der Übergabevorrichtung 54 an die Hängebahn 51 übergeben und in die Aufnahmen 56 der Hängebahn 51 eingehängt wird. Daraufhin kann der Träger mitsamt der eingehängten Hängeware 35 zur weiteren Handhabung auf der Hängebahn 51 des Hängefördersystems transportiert werden. Die Verfahrensschritte sind schematisch in dem Ablaufdiagramm aus Fig. 29 dargestellt.

Andersherum kann die Hängeware 35 an dem Übergabeplatz 50 auch gemäß einem weiteren Verfahren von der Hängebahn 51 des Hängefördersystems an das an das Lager- und Entnahmesystem 3 übergeben werden.

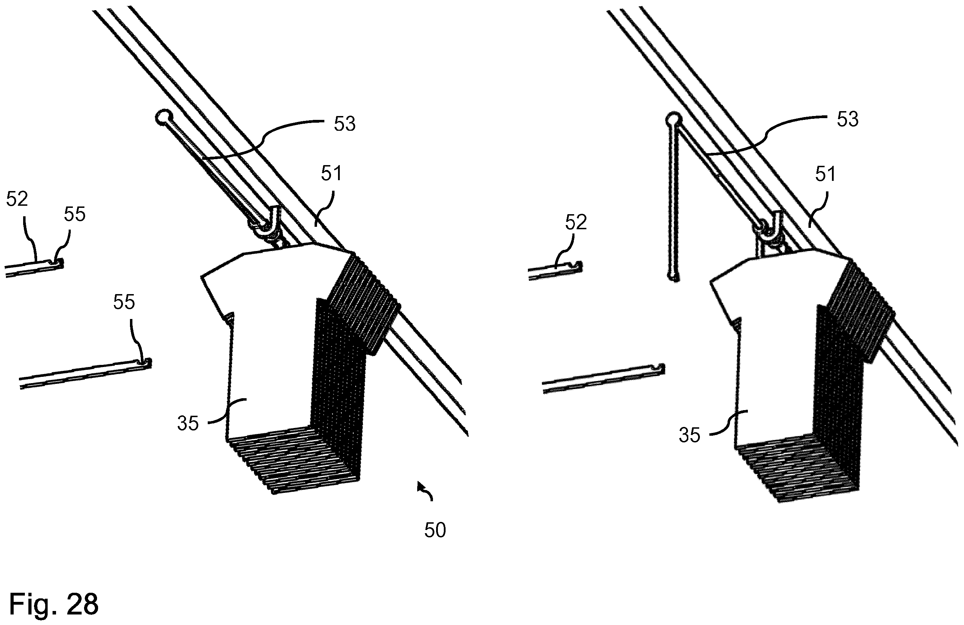

Dabei wird der Träger 11 zunächst von der Hängebahn 51 des Hängefördersystems an den Übergabeplatz 50 gebracht, siehe Fig. 25 und Fig. 28 jeweils rechts. Daraufhin kann die Übergebevorrichtung 53 um die Achse 57 zu dem in den Aufnahmen der Hängebahn 56 eingehängten Träger 11 verschwenkt werden und mit ihrem aktiven Greifer 54 den Träger 11 greifen, so dass der Träger gemäß einem Schritt a2) von der Hängebahn 51 an die Übergabevorrichtung 53 des Übergabeplatzes 50 übergeben wird, siehe Fig. 25 und Fig. 28 jeweils links.

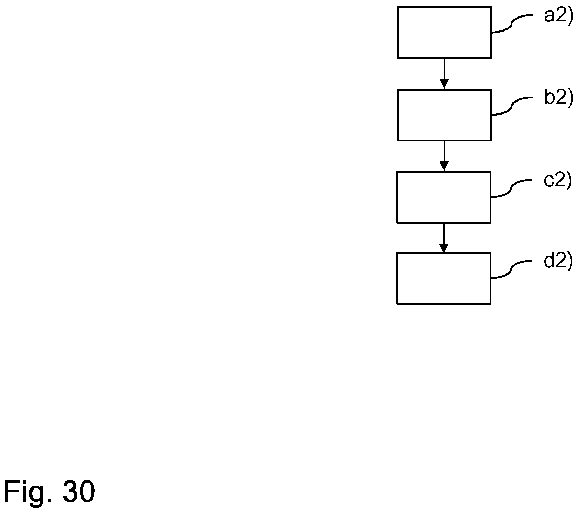

In einem darauffolgenden Schritt b2) kann der Träger 11 mittels der Übergabevorrichtung 53 von der Hängebahn 51 zu der 52 Haltevorrichtung des Übergabeplatzes 50 überführt werden, siehe Fig. 24 und Fig. 27, jeweils erst rechts und dann links. Ist die Übergabevorrichtung 53 um ihre Achse 57 verschwenkt worden und hat den Träger zu der Haltevorrichtung 52 überführt, so kann gemäß Schritt c2) der Träger 11 von der Übergabevorrichtung 53 an die Haltevorrichtung 55 übergeben werden, indem der aktive Greifer 54 der Übergabevorrichtung 53 den Träger 11 in die Aufnahmen 55 der Haltevorrichtung 52 legt. Die Übergabevorrichtung 53 kann daraufhin zurück in ihre Ruheposition verschwenkt werden, siehe Fig. 23 und Fig. 26 jeweils rechts. Der in der Haltevorrichtung 52 aufgenommene Träger 11 kann von der Haltevorrichtung 52 an das Transportfahrzeug übergeben werden. Insbesondere kann der Träger 11 von dem Greifer 10 des Transportfahrzeugs entnommen und dann in dem Lager- und Entnahmesystem gehandhabt werden, siehe Fig. 23 und Fig. 26 jeweils links. Die Verfahrensschritte sind schematisch in dem Ablaufdiagramm aus Fig. 30 dargestellt.

Hinsichtlich weiterer vorteilhafter Ausgestaltungen des erfindungsgemäßen Lager- und Entnahmesystems, Arbeitsplatzes, Transportfahrzeugs, Übergabeplatzes und/oder Trägers sowie des erfindungsgemäßen Verfahrens zum Betreiben eines Lager- und Entnahmesystems wird zur Vermeidung von Wiederholungen auf den allgemeinen Teil der Beschreibung sowie auf die beigefügten Ansprüche verwiesen. Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Transportfahrzeug
- 2: Gitterstruktur
- 3: Lager- und Entnahmesystem
- 5: Räder in Längsrichtung
- 6: Räder in Querrichtung
- 7: Dach
- 8: Ausleger
- 10: Greifer
- 11: Träger
- 12: Aufnahme am Transportfahrzeug
- 13: Aufnahme am Transportfahrzeug
- 15: Bänder
- 16: Lagersäule
- 17: Lagerstruktur
- 19: Enden des Trägers
- 20: Umfängliche Ausnehmungen
- 21: Scheiben
- 23: Bereich
- 24: Trägerlängsachse
- 25: Segmente
- 27: Als Sägezahnprofil ausgebildete Aufnahme
- 28: Vertikalrichtung
- 29: Horizontalrichtung
- 30: als Leiste ausgebildete Aufnahme
- 31: Auflagefläche
- 32: Rotationsrichtung
- 33: Ausnehmung
- 34: Informationsträger
- 35: Hängeware
- 36: Haken
- 37: Zahnrad
- 39: Klemmvorrichtungen
- 40: Klappen
- 41: Arbeitsplatz
- 42: Schacht
- 44: Abdeckung
- 45: Zugangsöffnung
- 47: U-förmige Aufnahme
- 50: Übergabeplatz
- 51: Hängebahn
- 52: Haltevorrichtung
- 53: Übergabevorrichtung
- 54: Aktiver Greifer der Übergabevorrichtung
- 55: Aufnahme der Haltevorrichtung
- 56: Aufnahme der Hängebahn
- 57: Achse der Übergabevorrichtung
- a1, b1, c1, d1: Schritte
- a2, b2, c2, d2: Schritte

## Patentansprüche

1. Lager- und Entnahmesystem (3), umfassend:
eine Gitterstruktur (2) mit einer Vielzahl von Gitterzellen, wobei jede Gitterzelle eine Lagersäule (16) einer unterhalb der Gitterstruktur (2) angeordneten Lagerstruktur (17) definiert, wobei die Lagersäulen (16) geeignet sind, jeweils einen vertikalen Stapel von Behältern aufzunehmen, und wobei die Gitterstruktur (2) Längstransportwege in einer Längsrichtung und Quertransportwege in einer Querrichtung definiert, und
mindestens ein zum Fahren entlang der Längstransportwege und/oder Quertransportwege ausgebildetes Transportfahrzeug (1),
**dadurch gekennzeichnet, dass** mindestens eine Lagersäule (16) eine Aufnahme (27, 30, 47) für mindestens einen Träger (11) zum Einhängen von Hängeware (35) aufweist.

2. Lager- und Entnahmesystem (3) nach Anspruch 1, **dadurch gekennzeichnet, dass** die Aufnahme ein Sägezahnprofil (27) aufweist oder U-förmig (47) ausgebildet ist und/oder dass die Aufnahme (30) in einer Auflagefläche (31) für den Träger eine Ausnehmung (33) aufweist, wobei der Träger (11) vorzugsweise in einer ersten Pose teilweise auf der Auflagefläche (31) aufliegen kann, und in einer zweiten Pose durch die Ausnehmung (33) hindurch vertikal (28) bewegbar ist.

3. Lager- und Entnahmesystem (3) nach Anspruch 1 oder 2, **dadurch gekennzeichnet, dass** die Aufnahme (30) an einer Vertikalstrebe in der Lagersäule (16) angeordnet ist, wobei vorzugsweise mehrere Aufnahmen auf unterschiedlichen Höhen an der Vertikalstrebe angeordnet sind.

4. Lager- und Entnahmesystem (3) einem der Ansprüche 1 bis 3, **dadurch gekennzeichnet, dass** ein Informationsträger (34) innerhalb der Lagersäule (16) angeordnet ist, der Informationen in Bezug auf eine Lagerhöhe und/oder Lagerposition trägt.

5. Arbeitsplatz (41) für ein Lager- und Entnahmesystem (3) nach einem der Ansprüche 1 bis 4 zur Schaffung eines Zugangs zu mindestens einem Träger (11).

6. Arbeitsplatz (41) nach Anspruch 5, **dadurch gekennzeichnet, dass** der Arbeitsplatz (41) einen vertikalen Schacht (42) aufweist, wobei ein Träger (11) mittels eines dem Transportfahrzeug (1) oder der Gitterstruktur (2) zugeordneten Lastaufnahmemittel (10) entlang dem Schacht (42) von dem Transportfahrzeug (1) kommend in Richtung einer Zugangsöffnung (45) im Schacht (42) oder entgegengesetzt in Richtung Transportfahrzeug (1) bewegt werden kann und wobei ein im Schacht (42) befindlicher Träger (11) durch die Zugangsöffnung (45) zugänglich machbar ist, wobei die Zugangsöffnung (45) mit einer Abdeckung (44) verschließbar sein kann, wobei
die Abdeckung (44) vorzugsweise in einer geschlossenen Position die Zugangsöffnung (45) verschließt und in einer geöffneten Position die Zugangsöffnung (45) freigibt, und wobei
die Abdeckung (44) weiter vorzugsweise in der geöffneten Position den Schacht (42) zum Transportfahrzeug (1) hin verschließen kann.

7. Transportfahrzeug (1) für ein Lager- und Entnahmesystem (3) nach einem der Ansprüche 1 bis 4, **dadurch gekennzeichnet, dass** das Transportfahrzeug (1) ein Lastaufnahmemittel (10) mit mindestens einer Aufnahme (12, 13) für mindestens einen Träger (4) zum Einhängen von Hängeware (35) aufweist.

8. Transportfahrzeug (1) nach Anspruch 7, **dadurch gekennzeichnet, dass** das Lastaufnahmemittel (10) eine Begrenzungseinrichtung (39, 40) aufweist, die eingerichtet ist, um ein Schwenken der Hängeware (35) während des Transports zu begrenzen.

9. Übergabeplatz (50) zur Übergabe von Hängeware (35) zwischen einem Lager- und Entnahmesystem (3) nach einem der Ansprüche 1 bis 4 und einer Hängebahn (51) eines Hängefördersystems, umfassend eine Aufnahme (54, 55, 56) für mindestens einen Träger (11) zum Einhängen von Hängeware (35).

10. Übergabeplatz (50) nach Anspruch 9, umfassend:
eine Haltevorrichtung (52), die mindestens eine erste Aufnahme (55) aufweist und eingerichtet ist, um mindestens einen Träger (11) zum Einhängen von Hängeware (35) aufzunehmen,
eine Übergabevorrichtung (53), die eingerichtet ist, um den Träger (11) von dem Lager- und Entnahmesystem (3) zu der Hängebahn (51) und/oder andersherum zu überführen, und
mindestens eine der Hängebahn (51) zugeordnete zweite Aufnahme (56), die eingerichtet ist, um mindestens einen Träger (11) zum Einhängen von Hängeware (35) aufzunehmen.

11. Übergabeplatz (50) nach Anspruch 9 oder Anspruch 10, **dadurch gekennzeichnet, dass** die Übergabevorrichtung (53) den Träger (11) in einer translatorischen Bewegung und/oder in einer Schwenkbewegung überführt.

12. Träger (11) zum Einhängen von Hängeware (35) für ein Lager- und Entnahmesystem (3) nach einem der Ansprüche 1 bis 4, für einen Arbeitsplatz (41) nach einem der Ansprüche 5 bis 6, für ein Transportfahrzeug (1) nach Anspruch 7 oder Anspruch 8 und/oder für einen Übergabeplatz (50) nach einem der Ansprüche 9 bis 11.

13. Verfahren zum Betreiben eines Lager- und Entnahmesystems (3) nach einem der Ansprüche 1 bis 4, eines Arbeitsplatzes (41) nach einem der Ansprüche 5 oder 6, eines Transportfahrzeugs (1) nach Anspruch 7 oder Anspruch 9 und/oder eines Übergabeplatzes (50) nach einem der Ansprüche 9 bis 11, **dadurch gekennzeichnet, dass** Hängeware (35) in mindestens einen Träger (11) zur Lagerung eingehängt und/oder zur Entnahme ausgehängt wird.

14. Verfahren zur Übergabe von Hängeware (35) von einem Lager- und Entnahmesystem (3) nach einem der Ansprüche 1 bis 4 an eine Hängebahn (51) eines Hängefördersystems an einem Übergabeplatz (50) nach einem der Ansprüche 9 bis 11, umfassend die folgenden Schritte:
a1) Übergabe des Trägers (11) von dem Transportfahrzeug (1) an eine Haltevorrichtung (52) des Übergabeplatzes (50), vorzugsweise von einem Lastaufnahmemittel (10) des Transportfahrzeugs (1) an eine erste Aufnahme (55) der Haltevorrichtung (52);
b1) Übergabe des Trägers (11) von der Haltevorrichtung (52) des Übergabeplatzes (50) an eine Übergabevorrichtung (53) des Übergabeplatzes (50), vorzugsweise mittels eines der Übergabevorrichtung (53) zugeordneten aktiven Greifers (54);
c1) Überführen des Trägers (11) von der Haltevorrichtung (52) zu der Hängebahn (51); und
d1) Übergabe des Trägers von der Übergabevorrichtung (53) an die Hängebahn (51), vorzugsweise an eine der Hängebahn (51) zugeordnete zweite Aufnahme (56).

15. Verfahren zur Übergabe von Hängeware (35) von einer Hängebahn (51) eines Hängefördersystems an ein Lager- und Entnahmesystem (3) nach einem der Ansprüche 1 bis 4 an einem Übergabeplatz (50) nach einem der Ansprüche 9 bis 11, umfassend die folgenden Schritte:
a2) Übergabe des Trägers (11) von der Hängebahn (51), vorzugsweise von einer der Hängebahn (51) zugeordneten zweiten Aufnahme (56), an eine Übergabevorrichtung (53) des Übergabeplatzes (50), vorzugsweise mittels eines der Übergabevorrichtung (53) zugeordneten aktiven Greifers (54);
b2) Überführen des Trägers (11) von der Hängebahn (51) zu einer Haltevorrichtung (52) des Übergabeplatzes (50);
c2) Übergabe des Trägers von der Übergabevorrichtung an die Haltevorrichtung (52), vorzugsweise an eine erste Aufnahme (55) der Haltevorrichtung (52); und
d2) Übergabe des Trägers (11) von der Haltevorrichtung (52) an das Transportfahrzeug (1).
